(19) Europäisches Patentamt
European Patent Office
Office européen des brevets

(11) **EP 4 282 277 B1**

(12) **EUROPEAN PATENT SPECIFICATION**

(45) Date of publication and mention of the grant of the patent:
**21.01.2026 Bulletin 2026/04**

(21) Application number: **22742672.3**

(22) Date of filing: **21.01.2022**

(51) International Patent Classification (IPC):
*A23B 2/96* (2025.01)    *A23L 5/00* (2016.01)
*A23L 7/10* (2016.01)    *A23L 7/161* (2016.01)
*A23L 11/00* (2025.01)    *A23L 19/10* (2016.01)
*A23L 19/15* (2016.01)

(52) Cooperative Patent Classification (CPC):
**A23L 19/10; A23B 2/96; A23L 5/00; A23L 7/10;**
**A23L 7/161; A23L 11/05; A23L 19/15;** A23P 30/30

(86) International application number:
**PCT/JP2022/002114**

(87) International publication number:
**WO 2022/158553 (28.07.2022 Gazette 2022/30)**

(54) **PUFFED FOOD COMPOSITION CONTAINING BEANS AND/OR MILLET, AND METHOD FOR PRODUCING SAME**

GEPUFFTE LEBENSMITTELZUSAMMENSETZUNG MIT BOHNEN UND/ODER HIRSE UND VERFAHREN ZUR HERSTELLUNG DAVON

COMPOSITION ALIMENTAIRE SOUFFLÉE CONTENANT DES HARICOTS ET/OU DU MILLET, ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2021 JP 2021009117**

(43) Date of publication of application:
**29.11.2023 Bulletin 2023/48**

(73) Proprietor: **Mizkan Holdings Co., Ltd.**
**Handa-shi, Aichi 475-8585 (JP)**

(72) Inventor: **TAKEUCHI, Minoru**
**Handa-shi, Aichi 475-8585 (JP)**

(74) Representative: **Hasegawa, Kan**
**Patentanwaltskanzlei Hasegawa**
**Untere Hauptstraße 56**
**85354 Freising (DE)**

(56) References cited:
EP-A1- 3 729 970    WO-A1-2020/045051
JP-A- 2004 305 054    JP-A- 2004 305 054
JP-A- 2010 252 770    JP-A- 2010 252 770
US-A1- 2007 087 107

**Description**

Technical Field

The present invention relates to a puffed food composition comprising a pulse and/or millet, and a method for producing the same.

Background art

Heretofore, puffed food compositions classified as confectionaries have been required to have an airy texture, and a method for producing puffed food by puffing dough mainly composed of a starchy raw material such as wheat flour is known. In addition, a method is known in which a sweetener such as sugar is contained as an auxiliary material for improving the flavor of the puffed food. However, such a puffed food normally is likely to easily stick to teeth during chewing, does not have an airy texture due to insufficient puffing, and has a low degree of freedom in shaping.

With regard to the problems and techniques described above, JP S62-55045 A discloses a technique for producing a puff by using starch derived from wheat flour, but does not disclose a puff in which edible parts of a pulse and/or millet and a dietary fiber localized portion of an edible plant are used as raw materials, and the puff described in JP S62-55045 A is not sufficient in sticking property nor is excellent in airy texture. JP 2003-18970 A and DE 102009048508 A1

disclose a technique for producing a puff containing sugar, but the puff does not contain edible parts of a pulse and/or millet and a dietary fiber localized portion of an edible plant, and the saccharide is not a soluble carbohydrate being contained in an edible plant, but exists free in the tissues, so that not only quality can be impaired by problems (tastes, color tones and the like) resulting from thermal denaturation and coloring associated with puffing, but also low adherence and tissue fragility inherent in puffed food compositions remain. The degree of freedom in shaping is still low such that the binding property is low although the composition is compressively shaped in a subsequent step, which is undesirable quality.

Each of JP 2004-305054 A and JP 2010-252770 A discloses puffed food compositions that are produced by carrying out a puffing process on a feedstock composition obtained by blending cereals and beans.

EP 3729970 A1 discloses a solid food in which a core food is coated with a fat/oil composition containing a finely pulverized product of an edible part and/or an inedible part of a foodstuff containing an insoluble dietary fiber.

US 2007/087107 A1 discloses a composition comprising a dehydrated legume product having an increased amount of dietary fiber and a flour, a meal, or the flour and the meal.

Summary of Invention

Technical Problem

The present invention aims to provide a puffed food composition comprising a pulse and/or millet, which has an airy texture, is unlikely to stick to teeth, and has an improved degree of freedom in shaping.

Solution to Problem

The present inventors have energetically conducted studies in view of the above circumstances, and found that by blending a soluble carbohydrate contained in an edible plant with a puffed food composition containing a pulse and/or millet, adjusting the content of each of the components to be equal to or greater than a specified value, and then controlling the particle diameter of the puffed food composition after stirring, a property of easily sticking to teeth during chewing is reduced and an airy texture is enhanced, and further, the degree of freedom in shaping during and after puffing can be improved, leading to completion of the present invention according to the claims.

Advantageous Effect of Invention

The present invention provides a puffed food composition comprising pulses and/or millet which has an airy texture, is unlikely to stick to teeth, and has an improved degree of freedom in shaping.

Detaiked Description of the Invention

In the present invention, in the case where a plurality of upper limit values and/or a plurality of lower limit values are shown for the definition of any numerical value range, at least definitions of numerical value ranges in which a maximum value defined as an upper limit and a minimum value defined as a lower limit are combined are described in a direct manner even though the ranges are not explicitly shown, and all numerical value ranges obtained by combining any of the relevant upper limit values and any of the relevant lower limit values are intended to be covered by the present invention. For example, the phrases "2 mass% or more, preferably, in particular, 3 mass% or more, further more preferably 4 mass% or more, or 5 mass% or more, or 6 mass% or more, or 7 mass% or more, or 8 mass% or more, particularly preferably 9 mass% or more, in terms of dry mass" and "preferably 30 mass% or less, in particular, 25 mass% or less although there is no particular limitation", in the definition of the range of the soluble carbohydrate content, mean that all of numerical value ranges obtained by arbitrarily combining the disclosed upper limits and lower limits, specifically, all of 2 mass% or more and 30 mass% or less, 2 mass% or more and 25 mass% or less, 3 mass% or more and 30 mass% or less, 3 mass% or more and 25 mass% or less, 4 mass% or more and 30 mass% or less, 4 mass% or more and 25 mass% or less, 5 mass% or more and 30 mass% or less, 5 mass% or more and 25 mass% or less, 6 mass% or more and 30 mass% or less, 6 mass% or more and 25 mass% or less, 7 mass% or more and 30 mass% or less, 7 mass% or more and 25 mass% or less, 8 mass% or more and 30 mass% or less, 8 mass% or more and 25 mass% or less, 9 mass% or more and 30 mass% or less and 9 mass% or more and 25 mass% or less are covered by the present invention.

The present invention relates to a puffed food composition containing a pulse and/or millet and satisfying all of following characteristics (1) to (7).

(1) The composition contains dietary fibers at 3 mass% or more in terms of dry mass.

(2) The composition contains starch at 5 mass% or more in terms of dry mass.

(3) The composition contains protein at 4 mass% or more in terms of dry mass.

(4) The composition contains a soluble carbohydrate being contained in one or more edible plants selected from the group consisting of pulses, millet, potatoes, seeds, vegetables and fruit at 2 mass% or more in terms of dry mass.

(5) The composition contains an edible part of one or more selected from the group consisting of a pulse and/or millet, and a dietary fiber localized portion of an edible plant at 10 mass% or more in terms of dry mass to the entirety of the puffed food composition.

(6) A number-based average diameter of puffed food composition particles in a 2 mass% aqueous dispersion liquid of the puffed food composition in an ultrasonicated state, where distilled water serves as a measurement solvent, is 30 $\mu$m or less, by using a laser diffraction particle size distribution measurement apparatus.

(7) A maximum particle diameter of puffed food composition particles in a 2 mass% aqueous dispersion liquid of the puffed food composition in a nonultrasonicated state, where distilled water serves as a measurement solvent, is 300 $\mu$m or more, by using a laser diffraction particle size distribution measurement apparatus.

[Puffed food composition]

The "puffed food composition" (hereinafter, sometimes referred to simply as a "composition") in the present invention is a food composition prepared by expanding a raw material. Specific examples thereof include cereal puffs obtained by applying pressure to a raw material containing a dried edible plant, followed by rapid release to normal pressure, thereby expanding/evaporating moisture in the raw material to expand the volume, and cereal puffs obtained by adding water to powder of a dried edible plant, heating/pressurizing and kneading the mixture, and rapidly reducing the pressure, thereby expanding the volume to form a sponge shape. Mention is also made of bread or similar food (sometimes referred to as bread-like food) as a massive puffed composition which is produced by increasing the volume of a dough composition by heating or fermentation with a puffing agent, yeast or the like. The puffed food composition also includes a cereal puff or bread-like food obtained by forming a puffed composition into a desired shape, and more specifically, a compressively shaped puffed composition processed product (in the present invention, a composition whose volume is decreased to 50% or less by compression of the composition due to compressive shaping after the compression).

That is, the term "puffed food composition" in the present invention refers to a food obtained by expanding voids in the composition, a processed product thereof, and a composition containing the same. The preferred characteristic of the puffed composition of the present invention is an airy texture unique to puffed food. In the present invention, the term "airy texture" means a texture unique to puffed food which results from puffiness of the inside of puffed food. Specific examples thereof include a crisp texture in crackers, and a puffing feeling in bread. Even in a once formed puffed composition, it is difficult to perceive such an airy texture if the composition hardens, so that the structure thereof is hardly ruptured, or the composition cannot retain a puffed state, and thus shrinks, so that the number of inner voids decreases.

(Raw material)

The raw material of the composition of the present invention is not particularly limited as long as various component compositions and physical properties specified in the present invention can be achieved. However, it is preferable to use one or more edible plants as the raw material, it is preferable to use pulses and/or millet as the edible plant, and it is more preferable that at least pulses be contained. As the edible plant, the plant foodstuffs listed in the food group classification described in Standard tables of food composition in Japan, 2015 (seventh edition) (vegetables, potatoes, mushrooms, fruit, algae, grain (in particular, millet), seeds and the like), and also, wild grass normally used for eating as vegetables (fleawort, bracken, butterbur, mugwort and the like) can be used. The water content, on a dry amount basis, of the edible plant used for the composition of the present invention is normally less than 15 mass%, preferably, in particular, less than 13 mass%, further more preferably less than 11 mass%, further more preferably less than 10 mass%. On the other hand, the lower limit of the water content on a dry amount basis is not particularly limited, and it is normally 0 mass% or more, and further more preferably 0.01 mass% or more.

[Pulse]

The type of the "pulse" in the present invention is not limited as long as an edible part and/or a non-edible part thereof contain dietary fibers (in particular, insoluble dietary fibers). Examples thereof include, but are not limited to, common bean, scarlet runner bean, mottled kidney bean, soybean (in particular, green soybean), pea (in particular, green pea, yellow pea and white pea), pigeon pea, mung bean, yard long bean, small red bean, broad bean, soybean, black bean, chickpea, Lens culinaris, lentil, peanut, lupin bean, grass pea, locust bean, coffee bean, and cacao bean. Among them, soybean (in particular, green soybeans), pea (in particular, green pea), black bean and the like are preferable, and pea (in particular, green peas, yellow pea and white pea), chickpea, common bean, broad bean and mung bean are more preferable. The green soybean is a bean which is obtained by harvesting a premature soybean together with a pod without performing drying before the harvesting, and is green in appearance. Rather than soybeans dried to the extent that their color of the non-edible part changes before harvesting, soybeans which have not been dried before harvesting are preferable from the viewpoint of the nutritional value, and when the non-edible part is used, it is particularly preferable to use green soybeans.

The content ratio of the pulse to the puffed food composition of the present invention can be in the range of, for example, 10 mass% or more and 100 mass% or less in terms of dry mass. More specifically, the content ratio is preferably 10 mass% or more, further more preferably 15 mass% or more, further more preferably 20 mass% or more, further more preferably 25 mass% or more, further more preferably 30 mass% or more, further more preferably 35 mass% or more, further more preferably 40 mass% or more, further more preferably 45 mass% or more, further more preferably 50 mass% or more, further more preferably 55 mass% or more, further more preferably 60 mass% or more. The upper limit is not particularly limited, and it is preferably 100 mass% or less, more preferably 95 mass% or less.

Here, in the present invention, unless otherwise specified, the term "dry mass" means a balance mass obtained by subtracting a moisture amount calculated from a "water content on a dry amount basis" as described later from the mass of the entirety of the food, and the term "dry mass basis (sometimes referred to as a dry mass base or dry amount base)" means a content ratio of each component which is calculated from a dry mass of the composition as a denominator and a content of each component as a numerator (note that the term "wet mass basis" or "wet mass base" means a content ratio of each component which is calculated from a wet mass of the composition containing water as a denominator and a content of each component as a numerator). That is, the value of each measure value in terms of dry mass is determined by calculation from a wet mass rather than actual analysis of the composition after drying is performed. Among definitions of values in terms of dry mass in the composition of the present invention, definitions for blended raw materials and nutrient components, for which values do not change in accordance with the presence or absence of moisture or before or after processing, may be satisfied in the dough composition from the step (i) or in the step (ii). Except as otherwise noted, the ratio is given in terms of dry mass.

The pulse in the present invention may contain one or more pulses selected from the group consisting of the genera *Glycine, Pisum, Phaseolus, Cajanus, Vigna, Vicia, Cicer* and *Lens,* and more preferably contains one or more pulses selected from the group consisting of the genera *Pisum, Phaseolus, Cajanus, Vigna, Vicia, Cicer* and *Lens.* When pulses of the genus *Vigna* are used, the amount of the pulse used is more preferably 30% or less in the puffed food composition. For a foodstuff in which a part of edible parts (green soybeans, green peas and the like) is used as vegetables, whether the foodstuff is pulse can be determined by the state of the entirety of the plant also including non-edible parts (pod and the like) (soybeans, peas or the like).

The pulse containing starch in an amount equal to or greater than a predetermined value is preferable because the pulse having a low starch content (for example, soybeans) is required to be supplemented with additional starch. Specifically, the pulse having a starch content of generally 3 mass% or more, in particular 6 mass% or more, further more preferably 10 mass% or more in terms of dry mass is preferably used. The above-described definition may be satisfied in the step (i).

[Millet]

In the present invention, the term "millet" refers to grain described later except for rice, wheat and barley which are major grain, and the concept thereof also includes so-called quasi-millet other than Gramineae grain (Chenopodiaceae and Amaranthaceae). When millet is used in the composition of the present invention, the type of millet is not limited, and is for example, preferably one or more millets selected from the group consisting of Gramineae, Chenopodiaceae and Amaranthaceae, more preferably Gramineae. Specific examples of the millet which is preferably used include, but are not limited to, one or more of foxtail millet, Japanese millet, common millet, sorghum, rye, oat (Avena sativa), adlay, corn, buck wheat, amaranthus and quinoa, particularly oat (Avena sativa), amaranthus and quinoa. The millet is preferably substantially free of gluten (specifically, a state in which the gluten content is less than 10 ppm by mass), more preferably free of gluten.

The content ratio of millet to the puffed food composition of the present invention may be in the range of, for example, 10 mass% or more and 100 mass% or less in terms of dry mass. More specifically, the content ratio is preferably 10 mass% or more, further more preferably 15 mass% or more, further more preferably 20 mass% or more, further more preferably 25 mass% or more, further more preferably 30 mass% or more, further more preferably 35 mass% or more, further more preferably 40 mass% or more, further more preferably 45 mass% or more, further more preferably 50 mass% or more, further more preferably 55 mass% or more, further more preferably 60 mass% or more. The upper limit is not particularly limited, and it is preferably 100 mass% or less, more preferably 95 mass% or less. When the puffed food composition contains both pulse and millet, it is preferable that the total content of the pulse and millet satisfy the above-described definition. The definition may be satisfied in the step (i).

[Dietary fibers]

In the present invention, the term "dietary fiber" is a generic term of hardly digestible components in food, which cannot be digested by a human digestive enzyme, and the total of "water-soluble dietary fibers" and "insoluble dietary fibers" accounts for the "total amount of dietary fibers". In the present invention, the term "water-soluble dietary fiber" refers to dietary fibers which are soluble in water, and the term "insoluble dietary fiber" refers to dietary fibers which are insoluble in water. Examples of the soluble dietary fiber include, but are not limited to, pectin, glucomannan, sodium alginate, polydextrose, inulin and psyllium husks (about 50% of contained dietary fibers are soluble). Examples of the insoluble dietary fiber include, but are not limited to, lignin, cellulose, hemicellulose, chitin, chitosan, $\beta$-glucan, and foodstuffs containing these substances (for example, oat and psyllium husks (about 50% of contained dietary fibers are insoluble)). However, a puffed food composition containing lignin, particularly acid-soluble lignin, among the insoluble dietary fibers, is preferable because the puffed food composition does not become excessively hard, and an effect of producing an airy texture is obtained by applying the present invention. It is preferable to use raw materials containing both insoluble and soluble dietary fibers like psyllium husks and oat (about 70% of dietary fibers are insoluble). Specifically, the content ratio of soluble dietary fibers in terms of dry mass to the content ratio of dietary fibers in terms of dry mass in the entirety of the composition may be in the range of, for example, 5 mass% or more and 70 mass% or less. More specifically, the lower limit is preferably 5 mass% or more, or 10 mass% or more, or 15 mass% or more, or 20 mass% or more, or 25 mass% or more, or 30 mass% or more. The upper limit is not particularly limited, and it is normally 70 mass% or less, or 65 mass% or less, or 60 mass% or less. Psyllium husks may not be affected by ordinary high-temperature treatment, but may develop tackiness or may cause deterioration in processing suitability or a change in texture when they are subjected to high-temperature kneading (extruder treatment at above 100°C, or the like). Therefore, it is preferable that a foodstuff containing soluble dietary fibers be used in a fermentation puffed food composition to the extent that the above-described definition is satisfied, and more specifically, it is preferable to satisfy the definition in the step (i) in production of the fermentation puffed food composition.

The puffed food composition of the present invention contains dietary fibers (preferably insoluble dietary fibers) in a ratio equal to or greater than a certain value. Specifically, the content of dietary fibers (preferably insoluble dietary fibers) in the puffed food composition of the present invention may be in the range of, for example, 3 mass% or more and 50 mass% or less in terms of dry mass. More specifically, the lower limit thereof is 3 mass% or more, preferably, in particular, 4 mass% or more, further more preferably 5 mass% or more, further more preferably 6 mass% or more, further more preferably 7 mass% or more, further more preferably 8 mass% or more, further more preferably 9 mass% or more, particularly preferably 10 mass% or more. It is preferable that the content of dietary fibers (preferably insoluble dietary fibers) be equal to or greater than the lower limit from the viewpoint of suppressing sticking to teeth during eating. On the other hand, the upper limit of the content is not particularly limited, and it may be normally 50 mass% or less, and is, preferably, in particular, 40 mass% or less, or, in particular, 30 mass% or less, or, in particular, 25 mass% or less, particularly preferably 20 mass% or less, from the viewpoint of a good texture (the composition has an airy texture and is not excessively hard).

The puffed food composition of the present invention contains dietary fibers (in particular, insoluble dietary fibers) derived from at least one or more edible plants. The puffed food composition of the present invention may further contain dietary fibers (in particular, insoluble dietary fibers) derived from origins other than edible plants. It is more preferable that the majority of contained dietary fibers (in particular, insoluble dietary fibers) be derived from edible plants blended in the composition, it is more preferable that all of contained dietary fibers (in particular, insoluble dietary fibers) be derived from edible plants blended in the composition, and it is further more preferable that the dietary fibers be blended in the composition as dietary fibers (in particular, insoluble dietary fibers) being contained in edible plants. It is particularly preferable that a soluble carbohydrate and insoluble dietary fibers being contained in edible plants be in a state of being contained in the same plant because when the puffed composition is compressed, the composition does not stick to a mold which is a compression apparatus while the composition smoothly binds. Although the reason for this is unknown, it is thought that dietary fibers (in particular, insoluble dietary fibers) are impregnated with the soluble carbohydrate, so that the relevant structures intertangle between the compositions during compression, resulting in enhanced binding property.

When the puffed food composition of the present invention contains dietary fibers (in particular, insoluble dietary fibers) derived from origins other than edible plants, the origin is not limited. For example, the dietary fibers derived from various natural materials other than edible plants, which contain dietary fibers (in particular, insoluble dietary fibers), synthetic dietary fibers, or mixtures thereof may be used. When dietary fibers (in particular, insoluble dietary fibers) derived from natural materials are used, dietary fibers (in particular, insoluble dietary fibers) contained in one or more natural materials may be isolated/refined, or natural materials containing dietary fibers (in particular, insoluble dietary fibers) may be used as such. The above-described definition may be satisfied in the step (i).

In the present invention, the modified Prosky method is used as a method for measuring the total amount of dietary fibers (content of soluble dietary fibers and content of insoluble dietary fibers) in the puffed food composition, and the measurement is performed in accordance with the methods described in "Food Labeling Standards (2015 Cabinet Office Ordinance No. 10)" and "Standard tables of food composition in Japan, 2015 (seventh edition), Analysis Manual".

[Starch]

The puffed food composition of the present invention contains starch in a ratio equal to or greater than a predetermined value, and thus exhibits the effect of exhibiting a good puffing property as a puffed food composition and an airy texture in the present invention. The cause thereof is unknown, but protein and dietary fibers (in particular, insoluble dietary fibers) may interact with starch to form a network structure, resulting in the effect of the present invention.

The starch content in the puffed food composition of the present invention may be in the range of, for example, 5 mass% or more and 60 mass% or less in terms of dry mass. More specifically, the starch content is normally 5 mass% or more, preferably 7 mass% or more, further more preferably 8 mass% or more, further more preferably 10 mass% or more, further more preferably 11 mass% or more, further more preferably 13 mass% or more, particularly preferably 15 mass% or more. On the other hand, the upper limit of the starch content is not particularly limited, and it is preferably 60 mass% or less, more preferably 50 mass% or less, further more preferably 40 mass% or less, in terms of dry mass, in the puffed food composition of the present invention.

In the present invention, the proportion of refined starch to the starch content of the entirety of the puffed food composition is preferably 50 mass% or less, more preferably, in particular, 40 mass% or less, further more preferably 30 mass% or less, further more preferably 20 mass% or less, further more preferably 10 mass% or less, in terms of dry mass, and it is particularly preferable not to use refined starch, from the viewpoint that refined starch loses nutrient components and the like present in a very small amount in the production process. The refined starch is not particularly limited, and examples thereof include edible plant-derived refined raw starch, and starch obtained by processing the raw starch. In particular, the content of refined starch derived from one or more selected from the group consisting of corn, potato, tapioca and dogtooth violet is preferably equal to or smaller than the defined amount described above.

The origin of starch in the composition of the present invention is not particularly limited. Examples thereof include plant origins and animal origins. The starch may be blended in the composition as a pure product isolated from the origins, and is, in particular, preferably pulse-derived starch and/or millet-derived starch blended in the composition while being contained in the pulse and/or millet.

Specifically, the proportion of the total content of starch derived from the pulse and/or starch derived from millet, preferably the content of starch derived from the pulse, to the total starch content of the entirety of the composition may be in the range of, for example, 30 mass% or more and 100 mass% or less in terms of dry mass. More specifically, the lower limit thereof is normally 30 mass% or more, preferably, in particular, 40 mass% or more, or 50 mass% or more, or 60 mass% or more, or 70 mass% or more, or 80 mass% or more, or 90 mass% or more because the stickiness of the composition to teeth is reduced. The upper limit is not particularly limited, and it is normally 100 mass% or less, preferably less than 100 mass%. The pulse-derived starch is particularly preferably pea-derived starch, most preferably yellow pea-derived starch. The millet-derived starch is preferably oat-derived starch. It is preferable that the total of pulse-derived starch and millet-derived starch satisfy the above-described definition.

The proportion of the total content of starch blended in the composition while being contained in the pulse and/or starch blended in the composition while being contained in millet, preferably the content of starch blended in the composition while being contained in the pulse, to the total starch content of the entirety of the composition may be in the range of, for example, 30 mass% or more and 100 mass% or less in terms of dry mass. More specifically, the lower limit thereof is normally 30 mass% or more, preferably, in particular, 40 mass% or more, or 50 mass% or more, or 60 mass% or more, or 70 mass% or more, or 80 mass% or more, or 90 mass% or more because the stickiness of the composition to teeth is reduced. The upper limit is not particularly limited, and it is normally 100 mass% or less, preferably less than 100 mass%. It is preferable that the total of starch blended in the composition while being contained in the pulse and starch blended in the composition while being contained in millet satisfy the above-described definition.

In the present invention, the proportion of starch derived from wheat to the starch content of the entirety of the puffed food composition may be in the range of, for example, 0 mass% or more and 50 mass% or less in terms of dry mass. More specifically, the upper limit thereof is preferably 50 mass% or less, more preferably 30 mass% or less, further more preferably 10 mass% or less, and in particular, the puffed food composition is preferably substantially free of starch derived from wheat (specifically, less than 10 ppm, which is an allergen label standard, particularly a content of less than 1 ppm, which is the lower limit in a common measurement method), or free of starch derived from wheat. The lower limit is not particularly limited, and it is 0 mass% or more, or may be 0 mass% or more. The above-described definition may be satisfied in the step (i).

In the present invention, the starch content in the composition is measured by the method of AOAC996.11 in accordance with Standard tables of food composition in Japan, 2015 (seventh edition), where soluble carbohydrates (glucose, maltose, maltodextrin and the like) having an influence on a measured value are removed by extraction with 80% ethanol.

[Protein]

A preferred characteristic of the puffed food composition of the present invention is that the protein content of the composition is within a predetermined range. Specifically, the protein content of the puffed composition of the present invention may be normally in the range of, for example, 4.0 mass% or more and 40 mass% or less in terms of dry mass. More specifically, the protein content is preferably 4.0 mass% or more, in particular, 5.0 mass% or more, further more preferably 6.0 mass% or more, particularly preferably 7.0 mass% or more, or 8.0 mass% or more, or 9.0 mass% or more, or 10 mass% or more, or 11 mass% or more, or 12 mass% or more, or 13 mass% or more, or 14 mass% or more, or 15 mass% or more, or 16 mass% or more, or 17 mass% or more, or 18 mass% or more. The upper limit is not particularly limited, and it is preferably 40 mass% or less, more preferably 30 mass% or less, or may be 25 mass% or less.

The origin of protein in the composition of the present invention is not particularly limited. Examples thereof include plant origins and animal origins. The protein may be blended in the composition as a pure product isolated from the origins, and is, in particular, preferably pulse-derived protein and/or millet-derived protein blended in the composition in a state of being contained in the pulse and/or millet. Specifically, the proportion of the total content of pulse-derived protein and/or miller-derived protein, preferably the pulse-derived protein content, to the total protein content of the entirety of the composition may be in the range of, for example, 10 mass% or more and 100 mass% or less in terms of dry mass. More specifically, the protein content is normally 10 mass% or more, preferably, in particular, 20 mass% or more, further more preferably 30 mass% or more, particularly preferably 40 mass% or more, or 50 mass% or more, or 60 mass% or more, or 70 mass% or more, or 80 mass% or more, or 90 mass% or more. The upper limit is not particularly limited, and it is normally 100 mass% or less, preferably less than 100 mass%. The pulse-derived protein is particularly preferably pea-derived protein, most preferably yellow pea-derived protein. The millet-derived protein is preferably oat-derived protein. The above-described definition may be satisfied in the step (i).

In the present invention, the protein content in the composition is measured by a method in which a total nitrogen ratio measured by using the combustion method (improved Dumas method) specified in Food Labeling Act ("Food Labeling Standards" (Consumer Affairs Agency Food Labeling Division Notification No. 139 of March 30, 2015) is multiplied by the "nitrogen-protein conversion factor" to calculate the protein content.

[Soluble carbohydrate]

In the present invention, the term "soluble carbohydrate" refers to a carbohydrate soluble in water, and is a generic term of monosaccharides and oligosaccharides (saccharides in which about 2 to 10 monosaccharides are linked together). Therefore, the concept thereof does not encompass starch which is a component in which a much larger number of saccharides are linked together.

From the viewpoint of improving the binding property of the puffed food composition and improving the degree of freedom in shaping, the composition of the present invention contains soluble carbohydrates contained in one or more edible plants selected from the group consisting of pulses, grain (in particular, millet), potatoes, seeds, vegetables and fruit, in a ratio equal to or greater than a predetermined value in terms of dry mass. Specifically, the soluble carbohydrate content may be in the range of, for example, 2 mass% or more and 50 mass% or less in terms of dry mass. More specifically, the soluble carbohydrate content is normally 2 mass% or more, preferably, in particular, 3 mass% or more, further more preferably 4 mass% or more, or 5 mass% or more, or 6 mass% or more, or 7 mass% or more, or 8 mass% or more, particularly preferably 9 mass% or more. On the other hand, the upper limit of the soluble carbohydrate content is not particularly limited, and it is preferably 50 mass% or less, or 45 mass% or less, or 40 mass% or less, or 35 mass% or less, or 30 mass% or less, and in particular, preferably 25 mass% or less. Although the cause of improving the binding property of the puffed food composition and improving the degree of freedom in shaping property by incorporating soluble carbohydrates in a state of being blended in the composition while being contained in edible plants is unknown, it is preferable because a large number of highly reactive hydroxy groups exist, but these groups are held by a variety of components in edible plants, so that without causing thermal degradation and coloring and the like, the binding property between puffed food compositions is improved, and the degree of freedom in shaping is improved. In the present invention, the term "soluble carbohydrate being contained in edible plants" refers not to specific soluble carbohydrates completely extracted from other natural components (components other than soluble carbohydrates) as in refined saccharides, but to a state in which soluble carbohydrates (in particular, sucrose) contained edible in plants are contained while coexisting with a part or all of components other than the other soluble carbohydrates. Examples include a state in which soluble carbohydrates obtained by crushing, enzymatic decomposition or the like of edible plants are contained while coexisting with a part or all of the components other than soluble carbohydrates after being optionally subjected to concentration, filtration, sterilization and the like.

Specifically, the soluble carbohydrate blended in the composition while being contained in edible plants may be blended in the composition in a form of pulses or edible plants containing soluble carbohydrates, or a processed product thereof (for example, beet powder, sweet corn powder, almond powder, mango powder and sweet potato powder containing sucrose which is a soluble carbohydrate in a certain proportion or more), or may be blended in the composition in a state of being impregnated into the pulses and/or millet or edible plants, in a form of unrefined or roughly refined fruit juice (for example, date juice, in particular, roughly refined date juice which is not transparent fruit juice) containing soluble carbohydrates together with other natural components (components other than soluble carbohydrates, more preferably soluble components other than soluble carbohydrates, such as polyphenol and soluble dietary fibers), or in a form of unrefined or roughly refined starch syrup containing soluble carbohydrates obtained by enzymatic decomposition of starch in edible plants together with components other than other soluble carbohydrates. In the present invention, the proportion of the content of refined soluble carbohydrates to the soluble carbohydrate content of the entirety of the puffed food composition is preferably 50 mass% or less, more preferably, in particular, 40 mass% or less, further more preferably 30 mass% or less, further more preferably 20 mass% or less, further more preferably 10 mass% or less, in terms of dry mass, and it is particularly preferable not to use a refined soluble carbohydrate, from the viewpoint that refined soluble carbohydrates lose nutrient components and the like present in a very small amount in the production process. The refined soluble carbohydrate is not particularly limited, and the content of refined sucrose, refined fructose and refined glucose is preferably equal to or smaller than the defined amount described above. The above-described definition may be satisfied in the step (i).

The soluble carbohydrate content in the puffed food composition of the present invention can be determined by summing measured values determined by comparison with the contents of monosaccharide or oligosaccharide (di- to deca-saccharide) standards having a known concentration by using a high performance liquid chromatography method in accordance with the measurement methods in "Usable carbohydrates (glucose, fructose, galactose, sucrose, maltose, lactose and trehalose)" in "Standard tables of food composition in Japan, 2015 (seventh edition), Analysis Manual".

[Edible plant]

The puffed food composition of the present invention may contain edible plants selected from the group consisting of grain (in particular, rice, wheat and barley which are major grain but are not included in millet), potatoes, seeds, vegetables and fruit other than the pulse and/or millet. These edible plants may be used alone, or used in any combination of two or more thereof. These edible plants may be used as they are, or used after application of various treatments (for example, drying, heating, removal of harshness, peeling, removal of seeds, ripening, salting and pericarp processing). The classification of an edible plant can be determined by a state of the entirety of the plant having edible parts and non-edible parts combined. The contents of these edible plants can be appropriately set as long as the purpose of the present invention is not hindered.

The type of the grain is not limited as long as the edible parts and/or non-edible parts thereof contain dietary fibers (in particular, insoluble dietary fibers). Examples thereof include, but are not limited to, amaranthus, foxtail millet, oat, barley, common millet, quinoa, wheat, rice, sugar cane, buck wheat, corn (maize), adlay, Japanese millet, fonio and sorghum. Among them, millet described later is preferable, and for example, oat (Avena sativa) or corn (in particular, sweet corn) is preferable. The content ratio thereof may be in the range of, for example, 1 mass% or more and 50 mass% or less in terms of dry mass. More specifically, the content ratio of the grain is preferably 1 mass% or more, further more preferably 2 mass% or more, further more preferably 3 mass% or more, further more preferably 4 mass% or more, further more preferably 5 mass% or more, further more preferably 6 mass% or more, further more preferably 7 mass% or more, further more preferably 8 mass% or more, further more preferably 9 mass% or more, further more preferably 10 mass% or more, further more preferably 20 mass% or more. The upper limit is not particularly limited, and it is preferably 50 mass% or less, more preferably 40 mass% or less.

The type of the potato is not limited as long as the edible parts and/or non-edible parts thereof contain dietary fibers (in particular, insoluble dietary fibers). Examples include, but are not limited to, sunchoke, konnyaku imo, sweet potato, taro, water arum, hoopoe, potato, glutinous yam, ichoimo, nagaimo, Chinese yam, Japanese yam, water yam, cassava, yacon, dasheen, taccad, purple fleshed sweet potato and yam. Among them, sweet potato, purple fleshed sweet potato and the like are preferable, and in particular, sweet potato is preferable. The content ratio thereof may be in the range of, for example, 1 mass% or more and 50 mass% or less in terms of dry mass. More specifically, the content ratio is preferably 1 mass% or more, further more preferably 2 mass% or more, further more preferably 3 mass% or more, further more preferably 4 mass% or more, further more preferably 5 mass% or more, further more preferably 6 mass% or more, further more preferably 7 mass% or more, further more preferably 8 mass% or more, further more preferably 9 mass% or more, further more preferably 10 mass% or more, further more preferably 20 mass% or more. The upper limit is not particularly limited, and it is preferably 50 mass% or less, more preferably 40 mass% or less.

The type of the seeds is not limited as long as the edible parts and/or non-edible parts thereof contain dietary fibers (in particular, insoluble dietary fibers). Examples include, but are not limited to, almond, hemp, linseed, perilla, cashew nut, pumpkin seed, kaya, ginkgo nut, chestnut, walnut, poppy, coconut, sesame, pasania, Japanese horse-chestnut, lotus nut, water nut, pistachio, sunflower seed, Brazil nut, hazelnut, pecan, macadamia nut, pine and peanut. Among them, almond, cashew nut, pumpkin seed, macadamia nut, pistachio, hazelnut, coconut and the like are preferable, and almond, cashew nut, pumpkin seed and hazelnut are further more preferable. The content ratio thereof may be in the range of, for example, 1 mass% or more and 50 mass% or less in terms of dry mass. More specifically, the content ratio is preferably 1 mass% or more, further more preferably 2 mass% or more, further more preferably 3 mass% or more, further more preferably 4 mass% or more, further more preferably 5 mass% or more, further more preferably 6 mass% or more, further more preferably 7 mass% or more, further more preferably 8 mass% or more, further more preferably 9 mass% or more, further more preferably 10 mass% or more, further more preferably 20 mass% or more. The upper limit is not particularly limited, and it is preferably 50 mass% or less, more preferably 40 mass% or less.

The type of the vegetable is not limited as long as the edible parts and/or non-edible parts thereof contain dietary fibers (in particular, insoluble dietary fibers). Examples include, but are not limited to, artichoke, chives, ashitaba, asparagus, aloe, cucurbitaceous plant, green bean, udo, pea sprout, potted pea, snap pea, okra, turnip, pumpkin, leaf mustard, cauliflower, chrysanthemum, cabbage, cucumber, alpine leek, Chinese water spinach, watercress, arrowhead, kale, burdock, Japanese mustard spinach, zha cai, green pepper, Japanese basil, yard long bean, crown daisy, ginger, taro stem, sugukina, zucchini, cicely, celery, tatsoi, radish, takana, bamboo shoot, onion, chicory, qing-geng-cai, hot pepper, tomato, eggplant, Brassica flower, bitter cucumber, Chinese leek, carrot, Nozawana, Chinese cabbage, pak choi, basil, parsley, beet (beetroot), bell pepper, sweet coltsfoot, broccoli, sponge cucumber, spinach, horse radish, potherb mustard, mitsuba, mioga ginger, bean sprouts, cucumber, mulukhiya, lily bulb, mugwort, Chinese onion, arugula, rhubarb, lettuce, lotus root, scallion, Japanese horseradish, bracken, fleawort (psyllium), and herbs (cilantro, sage, thyme, basil, oregano, rosemary, mint, lemongrass, dill and the like). Among them, carrot, pumpkin, cabbage, kale, paprika, beet (beetroot), broccoli, spinach, onion, burdock, lotus root, tomato and the like are preferable. The content ratio thereof may be in the range of, for example, 1 mass% or more and 50 mass% or less in terms of dry mass. More specifically, the content ratio is preferably 1 mass% or more, further more preferably 2 mass% or more, further more preferably 3 mass% or more, further more preferably 4 mass% or more, further more preferably 5 mass% or more, further more preferably 6 mass% or more, further more preferably 7 mass% or more, further more preferably 8 mass% or more, further more preferably 9 mass% or more, further more preferably 10 mass% or more, further more preferably 20 mass% or more. The upper limit is not particularly limited, and it is preferably 50 mass% or less, more preferably 40 mass% or less.

The type of the fruit is not limited as long as the edible parts and/or non-edible parts thereof contain dietary fibers (in particular, insoluble dietary fibers). Examples include, but are not limited to, acerola, avocado, apricot, strawberry, fig, Japanese plume, citruses (Iyokan, Satsuma orange, orange, grapefruit, lime, lemon and the like), olive, persimmon, kiwi, guava, coconut, pomegranate, watermelon, prune, cherries (cherry fruit, black cherry and the like), jujube, date palm (date), pineapple, haskap, banana, papaya, loquat, grape, berries (blueberry, raspberry and the like), mango, mangosteen, melon, peach and apple. Among them, avocado, strawberry, berries, citruses, mango, pineapple, grape, apple and the like are preferable, and in particular, citruses, mango, pineapple and date are preferable. The content ratio thereof may be in the range of, for example, 1 mass% or more and 50 mass% or less in terms of dry mass. More specifically, the content ratio is preferably 1 mass% or more, further more preferably 2 mass% or more, further more preferably 3 mass% or more, further more preferably 4 mass% or more, further more preferably 5 mass% or more, further more preferably 6 mass% or more, further more preferably 7 mass% or more, further more preferably 8 mass% or more, further more preferably 9 mass% or more, further more preferably 10 mass% or more, further more preferably 20 mass% or more. The upper limit is not particularly limited, and it is preferably 50 mass% or less, more preferably 40 mass% or less.

From the viewpoint of markedly exhibiting the effect of the present invention, the edible plant in the present invention is preferably one or more selected from the group consisting of sweet corn, beet, almond, mango, sweet potato and date which contain both a soluble carbohydrate and dietary fibers (in particular, insoluble dietary fibers) in an amount equal to or greater than a predetermined value, among the above-described edible plants. The edible plants may be used as such, or may be used in a form of a dried and ground product (powder), or in a form of squeezed juice. Specifically, the edible plant can be used in a form of quinoa powder, oat powder, common millet powder, beet powder, sweet corn powder, almond powder, mango powder or sweet potato powder in a case of a dried and ground product, and in a form of mango juice or date juice in a case of squeezed juice. The above-described definition may be satisfied in the step (i).

[Edible part of dried foodstuff and dietary fiber localized portion of edible plants]

It is preferable that the puffed food composition in the present invention contain a dietary fiber (total of soluble dietary fibers and insoluble dietary fibers) localized portion of an edible plant in addition to an edible part of a pulse and/or millet because a good solid-state composition is obtained in which stickiness to teeth during chewing is reduced. Specifically, the total content of an edible part of a pulse and/or millet and a dietary fiber localized portion of an edible plant, preferably the total content of an edible part of a pulse and a dietary fiber localized portion of an edible plant, particularly the total content of an edible part of a pulse and a dietary fiber localized portion of a pulse, in the puffed food composition of the present invention may be in the range of, for example, 10 mass% or more and 100 mass% or less in terms of dry mass. More specifically, the lower limit thereof is 10 mass% or more, preferably, in particular, 15 mass% or more, further more preferably 20 mass% or more, further more preferably 25 mass% or more, further more preferably 30 mass% or more, further more preferably 35 mass% or more, further more preferably 40 mass% or more, particularly preferably 50 mass% or more, in terms of dry mass. On the other hand, the upper limit of the content is not particularly limited, and it is normally 100 mass% or less, 97 mass% or less, or 95 mass% or less, or 93 mass% or less, preferably 90 mass% or less.

It is preferable that together with the edible parts, one or more selected from the group consisting of a pulse seed coat part, a fleawort seed coat part and a millet bran part be contained in a predetermined rate as a dietary fiber localized portion of an edible plant. Further, the dietary fiber localized portion may be an insoluble dietary fiber localized portion, and the total content of an edible part of a pulse and/or millet and an insoluble dietary fiber localized portion of an edible plant is preferably in the above-described range.

Specifically, it is preferable that the puffed food composition in the present invention contain a dietary fiber localized portion of a pulse (seed coat parts) in addition to an edible part of a pulse because a good solid-state composition is obtained in which stickiness to teeth during chewing is reduced. Specifically, the total content of an edible part of a pulse and a dietary fiber localized portion of a pulse in the puffed food composition of the present invention may be in the range of, for example, 10 mass% or more and 100 mass% or less in terms of dry mass. More specifically, the lower limit thereof is 10 mass% or more, preferably, in particular, 15 mass% or more, further more preferably 20 mass% or more, further more preferably 25 mass% or more, further more 3preferably 0 mass% or more, further more preferably 35 mass% or more, further more preferably 40 mass% or more, particularly preferably 50 mass% or more, in terms of dry mass. On the other hand, the upper limit of the content is not particularly limited, and it is normally 100 mass% or less, or 97 mass% or less, or 95 mass% or less, or 93 mass% or less, preferably 90 mass% or less.

It is preferable that the puffed food composition in the present invention contain a dietary fiber localized portion of millet (bran parts) in addition to an edible part of millet because a good solid-state composition is obtained in which stickiness to teeth during chewing is reduced. Specifically, the total content of an edible part of millet and a dietary fiber localized portion of millet in the puffed food composition of the present invention may be in the range of, for example, 10 mass% or more and 100 mass% or less in terms of dry mass. More specifically, the lower limit thereof is 10 mass% or more, preferably, in particular, 15 mass% or more, further more preferably 20 mass% or more, further more preferably 25 mass% or more, further more preferably 30 mass% or more, further more preferably 35 mass% or more, further more preferably 40 mass% or more, particularly preferably 50 mass% or more, in terms of dry mass. On the other hand, the upper limit of the content is not particularly limited, and it is normally 100 mass% or less, 97 mass% or less, or 95 mass% or less, or 93 mass% or less, preferably 90 mass% or less.

It is further more preferable that an edible part of a pulse and/or millet and a dietary fiber localized portion of an edible plant be both contained in a form of finely ground pulse and/or finely ground millet.

The puffed food composition in the present invention preferably contains a seed coat part in fleawort which is wild grass normally used for eating (sometimes referred to as a fleawort seed coat or a psyllium husk), in a rate equal to or greater than a predetermined value, as a dietary fiber localized portion of an edible plant, further more preferably a fleawort seed coat part subjected to enzymatic treatment described later (specifically, treatment with cellulase and/or pectinase and/or xylanase is preferable, and treatment with at least pectinase or xylanase is particularly preferable), in a ratio equal to or greater than a predetermined value. For example, the content thereof may be in the range of, 0.1 mass% or more and 20 mass% or less. Specifically, the lower limit is preferably 0.1 mass% or more, more preferably 0.2 mass% or more, further more preferably 0.3 mass% or more, or 0.4 mass% or more, or 0.5 mass% or more, or 1.0 mass% or more, or 1.5 mass% or more, in terms of dry mass. On the other hand, the upper limit is, normally, not particularly limited, and it is preferably 20 mass% or less, more preferably 10 mass% or less, and it may be 7.5 mass% or less, or 5 mass% or less.

When a raw material subjected to treatment with enzymes such as cellulase, pectinase and xylanase is used, only one of the enzymes may be used, but it is preferable to perform the treatment by using at least pectinase or xylanase. When the treatment is performed by using pectinase, it is preferable to use pectinase and cellulase in combination. For a composition which is subjected to microbial fermentation, an enzyme such as cellulase, pectinase or xylanase may be added to dough before fermentation to perform enzymatic treatment in parallel to the fermentation, or a raw material containing insoluble dietary fibers, which has been subjected to enzymatic treatment, may be used. In particular, a raw material in which seed coat parts in fleawort which is wild grass normally used for eating (sometimes referred to as fleawort seed coats or psyllium husks) are treated with the above-described enzyme is preferably used because a good puffed product is obtained. In the dough composition in the step (i) described later, it is preferable that fleawort seed coats be contained in the above-described ratio, it is further more preferable that edible parts of a pulse and/or millet and fleawort seed coats be used in combination, and a fermentation puffed food composition in which a dough composition is subjected to a fermentation step is particularly preferable. The above-described definition may be satisfied in the step (i). Psyllium husks or enzyme-treated psyllium husks may not be affected by ordinary high-temperature treatment, but may develop tackiness or cause deterioration of processing suitability or a change in texture when they are subjected to high-temperature kneading (extruder treatment at above 100°C, or the like). Therefore, it is preferable that the fermentation puffed food composition contain psyllium husks or enzyme-treated psyllium husks to the extent that the above-described definition is satisfied, and more specifically, it is preferable to satisfy the above-described definition in the step (i) in production of the fermentation puffed food composition.

The term "dietary fiber localized portion of edible plants" in the present invention refers to a portion of the entirety of the foodstuff in which dietary fibers (that is, the total of soluble dietary fibers and insoluble dietary fibers) are localized, specifically a portion having a dietary fiber content ratio higher than that of the edible part in the foodstuff, more preferably 1.1 times or more, further more preferably 1.2 times or more, further more preferably 1.3 times or more, further more preferably 1.4 times or more, further more preferably 1.5 times or more, further more preferably 1.6 times or more, further more preferably 1.7 times or more, further more preferably 1.8 times or more, further more preferably 1.9 times or more, even more preferably 2.0 times or more the dietary fiber content ratio of the edible part in a dry state. For example, seed coat parts having a dietary fiber content ratio relatively higher than the dietary fiber content ratio (in particular, corresponding to an insoluble dietary fiber localized portion) in the edible part (seed leaf part) in the pulse, and a bran part having a insoluble dietary fiber content rate relatively higher than the insoluble dietary fiber content rate (in particular, corresponding to an insoluble dietary fiber localized portion) in the edible part in millet correspond to the insoluble dietary fiber localized portion. A seed coat part in fleawort which is wild grass normally used for eating (sometimes referred to as fleawort seed coats or psyllium husks) corresponds to the insoluble dietary fiber localized portion (in particular, a portion in which a soluble dietary fiber and an insoluble dietary fiber are localized). The fleawort seed coat part is particularly preferable from the viewpoint of nutrition because it contains a soluble dietary fiber in addition to an insoluble dietary fiber.

The dietary fiber content rate in a dietary fiber localized portion of an edible plant may be in the range of, for example, more than 10 mass% and 50 mass% or less in terms of dry mass. Specifically, the dietary fiber content rate in a dietary fiber localized portion of an edible plant is preferably more than 10 mass%, further more preferably more than 11 mass%, further more preferably more than 12 mass%, further more preferably more than 13 mass%, further more preferably more than 14 mass%, further more preferably more than 15 mass%, further more preferably more than 16 mass%, further more preferably more than 17 mass%, further more preferably more than 18 mass%, further more preferably more than 19 mass%, further more preferably more than 20 mass%. The upper limit is not particularly limited, and it is preferably 50 mass% or less. The dietary fiber localized portion of an edible plant in the present invention may be a part of the "edible part" (for example, seed coat parts of a pulse) of a foodstuff described later, or the "non-edible part", and the dietary fiber localized portion of edible plants is preferably a part of the "edible part".

When the puffed food composition of the present invention contains a dietary fiber localized portion (seed coat part) of finely ground pulse, the content thereof may be in the range of, for example, 0.01 mass% or more and 10 mass% or less in terms of dry mass. Specifically, the lower limit is preferably 0.01 mass% or more, in particular, 0.02 mass% or more, further more preferably 0.03 mass% or more, further more preferably 0.04 mass% or more, further more preferably 0.05 mass% or more, further more preferably 0.06 mass% or more, further more preferably 0.07 mass% or more, particularly preferably 0.08 mass% or more, in terms of dry mass. On the other hand, the upper limit of the content is not particularly limited, and it is preferably 10 mass% or less, more preferably 5 mass% or less. In the dough composition in the step (i) described later, it is preferable that pulse seed coat parts be contained in the above-described ratio, it is more preferable that edible parts of a pulse and/or millet and pulse seed coat parts be used in combination, and it is further more preferable that edible parts of a pulse and pulse seed coat parts be used in combination. It is particularly preferable that the fleawort seed coat parts and pulse seed coat parts be both contained. The dietary fiber localized portion may be insoluble dietary fiber localized portion, which satisfies the above-described definition.

With regard to the pulse and/or millet for use in the present invention, their edible part and dietary fiber localized portion (in particular, an insoluble dietary fiber localized portion or non-edible parts) of an edible plant may be derived from different types of edible plants, and from the viewpoint of consistency of taste, it is preferable to include an edible part and a

**EP 4 282 277 B1**

dietary fiber localized portion (in particular, an insoluble dietary fiber localized portion or a non-edible part) derived from the same type of edible plant. Further, it is preferable to include an edible part and a dietary fiber localized portion (in particular, an insoluble dietary fiber localized portion or a non-edible part) derived from the same individual edible plant. That is, by using a part or all of edible part and a part or all of dietary fiber localized portion (in particular, an insoluble dietary fiber localized portion or a non-edible part) derived from the same individual edible plant, such an edible plant can be utilized without being wasted. Therefore, it is preferable that a dietary fiber localized portion derived from the same type of edible plant as a pulse and/or millet which are edible parts be used as a dietary fiber localized portion of an edible plant. Specifically, it is preferable to use a dietary fiber localized portion of a pulse (in particular, a seed coat part which are an insoluble dietary fiber localized portion) when edible parts of a pulse are used, and it is preferable to use a dietary fiber localized portion of millet (in particular, a bran part which is an insoluble dietary fiber localized portion) when an edible part of millet is used.

For the composition of the present invention, "non-edible parts" of dried vegetables, dried grain (in particular, dried millet), dried potatoes, dried pulses and dried fruit can be used. In the present invention, the "non-edible part" of the dried vegetables, dried grain (in particular dried millet), dried potatoes, dried pulses and dried fruit represent parts of edible plants, which are normally unsuitable for eating and drinking, and parts which are discarded in normal dietary habits, and the "edible part" represents a part in which the discard portion (non-edible part) is excluded from the entirety of the edible plant. Particularly in the case of edible plant containing a thick dietary fiber layer, trichome, and the like, a part containing a thick dietary fiber layer, trichome, and the like are poor in edibility and compatibility with other foods, and have been heretofore often discarded without being subject to eating. Here in the present invention, non-edible parts containing such a thick dietary fiber layer and trichome, and the like can be suitably used. Table 1 shows specific examples of "non-edible part".

Examples of the non-edible part of edible plants include peel, seeds, cores and strained lees of the above-described various plants and pulses. In particular, as non-limiting examples, peel, seeds, cores, strained lees and the like of corn (for example, sweet corn and the like), paprikas, pumpkins, beets, broccolis, spinaches, carrots, kales, soybeans (in particular, green soybeans), peas, broad beans, tomatoes, rice, onions, cabbages, apples, grapes, sugar canes, citruses (for example, satsuma oranges and yuzu) can be suitably used in the present invention because nutrients remain in abundance. Specific examples of the non-edible part of edible plants include, but are not limited to, bracts, pistils and cobs (cores) of corn (for example, sweet corn), seeds and hulls of paprikas, seeds and guts of pumpkins, peel of beets, stems and leaves of broccolis, bases of spinaches, root tips and leafstalk bases of carrots, leafstalk bases of kales, pods (shell) of soybeans (green soybeans), pods (shell) of peas, seed coats and pods (shell) of broad beans, hulls of tomatoes, husks of (unhulled) rice, peel (bracts), bottom parts and head parts of onions, cores of cabbages, cores of apples, skins and seeds of grapes, strained lees of sugar canes, and peel, seeds and pith of citruses (for example, satsuma oranges and yuzu). Preferably, components harmful to the human body are not contained to the extent that the human body is affected.

The portion and proportion of a non-edible part in the pulse and edible plant for use in the present invention can be clearly understood by a person skilled in handling of the relevant food and processed products of the food. For example, the "removed portion" and the "refuse" described in in Standard tables of food composition in Japan, 2015 (seventh edition) can be referred to, and regarded as portion and proportion, respectively, of a non-edible part. Table 1 below lists examples of edible plants, and the "removed portion" and the "refuse" (that is, portion and proportion of non-edible parts) described in Standard tables of food composition in Japan, 2015 (seventh edition) for these edible plants.

[Table 1]

| Edible plant | Portion of non-edible part (removed portion) | Proportion of non-edible part (refuse) |
|---|---|---|
| Vegetable/green soybean/raw | Shell | 45% |
| Vegetable/(maize)/sweet corn/immature seed, raw | Bract, pistil and cob | 50% |
| Vegetable/(pumpkin)/Japanese pumpkin/fruit, raw | Guts, seed and both ends | 9% |
| Vegetable/(bell pepper)/red bell pepper/fruit, raw (paprika) | Hull, core and seed | 10% |
| Vegetable/beet/root, raw | Root end, peel and leafstalk | 10% |
| Vegetable/broccoli/inflorescence, raw | Stem and leaf | 50% |
| Vegetable/(tomato)/tomato/fruit, raw | Hull | 3% |
| Vegetable/(cabbage)/cabbage/head leaf, raw | Core | 15% |
| Vegetable/spinach/leaf, raw | Base | 10% |

(continued)

| Edible plant | Portion of non-edible part (removed portion) | Proportion of non-edible part (refuse) |
|---|---|---|
| Vegetable/kale/leaf, raw | Leafstalk base | 3% |
| vegetable/(pea)/green pea/raw | Shell | 55% |
| Vegetable/broad bean/immature bean/raw | Seed coat, shell | 80% |
| Vegetable/(carrot)/root, unhusked, raw | Root end and leafstalk base | 3% |

From the viewpoint of exhibiting the effect of the present invention, the proportion of non-edible parts of a pulse and edible plant to the puffed food composition may be in the range of, for example, 1 mass% or more and 90 mass% or less in terms of dry mass. Specifically, the lower limit is preferably 1 mass% or more, in particular, 2 mass% or more, further more preferably 3 mass% or more, further more preferably 5 mass% or more, particularly preferably 8 mass% or more, in terms of dry mass. The upper limit is not particularly limited, and it is preferably 90 mass% or less, in particular, 80 mass% or less, particularly preferably 70 mass% or less.

The puffed food composition in the present invention may contain grain (rice, wheat and barley which are major grain which are not included in millet), potatoes, seeds, vegetables and fruit, and processed products thereof (for example, fruit juice, powder which is a dried and ground product), in addition to the pulse and millet, and the total content thereof, in terms of a ratio to the puffed food composition, may be in the range of, for example, 0 mass% or more and 90 mass% or less in terms of dry mass from the viewpoint of exhibiting the effect of the present invention. More specifically, this total content is preferably 0 mass% or more, preferably 5 mass% or more, more preferably 7 mass% or more, particularly preferably 10 mass% or more. The upper limit is not particularly limited, and it is preferably 90 mass% or less, or 80 mass% or less, or 60 mass% or less, in terms of dry mass.

The pulse, grain (including millet), potatoes, seeds, vegetables and fruit contained are preferably dried products, further more preferably dried and finely ground products (powder). The particle diameter $d_{50}$ of the powder after stirring (after ultrasonication) may be in the range of, for example, 0.3 μm or more and less than 500 μm. More specifically, this particle diameter is preferably less than 500 μm, more preferably 450 μm or less, further more preferably 400 μm or less, further more preferably 350 μm or less, further more preferably 300 μm or less, further more preferably 250 μm or less, further more preferably 200 μm or less, further more preferably 150 μm or less, further more preferably 100 μm or less, further more preferably 90 μm or less, further more preferably 80 μm or less, further more preferably 70 μm or less, further more preferably 60 μm or less, even more preferably 50 μm or less. The lower limit of the particle diameter $d_{50}$ after stirring (after ultrasonication) is not particularly limited, and it is normally 0.3 μm or more, preferably 1 μm or more, more preferably 5 μm or more, further more preferably 10 μm or more.

When the above-described finely ground products are used, the composition may be bound while maintaining the shape of finely ground products in the ultimate puffed composition, or finely ground products in the dough composition may be melted into an indistinct combination in the puffed composition due to processing. The above-described definition may be satisfied in the step (i).

[Characteristics related to particle diameter]

The puffed food composition of the present invention contains insoluble dietary fibers in a form of fine particles or a fine particle complex. Such fine particles may be formed from only one or more kinds of insoluble dietary fibers, or may be formed from one or more kinds of insoluble dietary fibers and one or more other components.

In the puffed food composition of the present invention, at least some of the fine particles containing insoluble dietary fibers are aggregated to form a complex which can be crushed by stirring a dispersion liquid of the puffed food composition. The puffed food composition of the present invention contains insoluble dietary fibers in a form of such a complex, so that an airy texture is achieved while sticking to teeth is unlikely to occur. Unless otherwise specified, the present invention assumes ultrasonication of a dispersion liquid of the puffed food composition as a typical example of external stirring for crushing the fine particle complex. In the present invention, the term "ultrasonication" means treatment in which an ultrasonic wave with a frequency of 40 kHz is applied to a measurement sample at a power of 40 W for 3 minutes unless otherwise specified.

The puffed food composition of the present invention contains a complex of fine particles containing insoluble dietary fibers, and the values of various physical properties such as a particle diameter for the fine particles and complex before and after the dispersion liquid of the puffed food composition is stirred are adjusted to be in the ranges described later, so that an airy texture is achieved while sticking to teeth is unlikely to occur. The cause of this is unknown, but it is thought that a complex having a characteristic shape looking as if a plurality of dietary fibers gathered together are formed in the puffed food composition, and this complex exhibits various effects.

In particular, the puffed food composition of the present invention contains a large number of fine particle complexes which have a strong linkage and relatively hardly collapse when stirring is not applied to the dispersion liquid, that is, before the ultrasonication is performed, whereas a part or all of the fine particle complexes collapse into single fine particles when stirring is applied, that is, after the ultrasonication is performed. Thus, after the ultrasonication, various parameters related to the particle diameter change in accordance with the degree of the collapse.

Unless otherwise specified, the term "particle diameter" in the present invention refers exclusively to a particle diameter measured on a volume basis. Unless otherwise specified, the concept of "particles" in the present invention may include not only single fine particles, but also fine particle complexes formed by aggregation of the single fine particles.

(Number-based average diameter)

The term "number-based average diameter" in the present invention refers to an average diameter determined from a virtual number distribution determined by calculation on the assumption that all particles in the dried powder in the present invention are spherical. The number-based average diameter is calculated from $\Sigma(v/d^2)/\Sigma(v/d^3)$ (d: representative value of particle diameter channels, v: percent on a volume basis for each channel), and gives a numerical value significantly different from that of the volume-based average diameter. Due to the characteristic, the number-based average diameter has a smaller value for a composition having a relatively large "number" of fine particles, and therefore an index is provided which reflects a characteristic that fine particles are contained in addition to particle complex structures generated in the ultimate composition (typically defined by the numerical value of d90 after stirring). A composition having such a characteristic can be obtained by using edible plant powder having a number-based average diameter equivalent to that of the composition as a raw material.

In the present invention, the number-based average particle diameter measured for a sample obtained by ultrasonication on a 2 mass% aqueous dispersion liquid of the puffed food composition with a laser diffraction particle size distribution measurement apparatus, where distilled water serves as a measurement solvent, is preferably equal to or smaller than a predetermined value from the viewpoint of the shaping. Specifically, this number-based average diameter may be in the range of, for example, more than 0.1 $\mu$m and 30 $\mu$m or less because an airy texture is likely to be lost if the number-based average diameter of puffed food composition particles in a 2 mass% aqueous dispersion liquid on the assumption that all particles are spherical is more than 30 $\mu$m. More specifically, this number-based average diameter is preferably 30 $\mu$m or less, preferably 25 $\mu$m or less, preferably 20 $\mu$m or less, preferably 18 $\mu$m or less, more preferably 15 $\mu$m or less, preferably 13 $\mu$m or less, preferably 10 $\mu$m or less. The lower limit is not particularly limited, and it is preferably more than 0.1 $\mu$m, preferably more than 2.0 $\mu$m, preferably more than 4.0 $\mu$m. The above-described definition may be satisfied in the step (i).

(Characteristic related to maximum particle diameter)

Further, when the puffed food composition of the present invention contains particles before stirring, that is, before ultrasonication, of the dispersion liquid of the puffed food composition, whose maximum diameter is equal to or greater than a predetermined value, an airy texture is imparted, and sticking to teeth is suppressed. Specifically, the maximum particle diameter before stirring may be in the range of, for example, 300 $\mu$m or more and 2 000 $\mu$m or less because an airy texture is hardly perceived if the maximum particle diameter of particles in a 2 mass% aqueous dispersion liquid of the puffed food composition before stirring of the dispersion liquid of the puffed food composition of the present invention, that is, before ultrasonication is less than 300 $\mu$m. Specifically, the lower limit is 300 $\mu$m or more, preferably, in particular, 350 $\mu$m or more, further more preferably 400 $\mu$m or more, or 500 $\mu$m or more, or 600 $\mu$m or more, or 700 $\mu$m or more, or 800 $\mu$m or more, or 900 $\mu$m or more, or 1 000 $\mu$m or more, particularly preferably 1 100 $\mu$m or more. On the other hand, the upper limit of the maximum particle diameter of particles in the dispersion liquid before stirring, that is, before ultrasonication, of the 2 mass% aqueous dispersion liquid of the puffed food composition of the present invention is not particularly limited, and it is preferably 2 000 $\mu$m or less, in particular, 1 700 $\mu$m or less. The above-described definition may be satisfied in the step (i).

(Lowering rate in 90% cumulative particle diameter (d90) in an ultrasonicated state on 2 mass% aqueous dispersion liquid of puffed food composition)

In the puffed food composition of the present invention, the lowering rate in particle diameter d90 in an ultrasonicated state on the 2 mass% aqueous dispersion liquid of the puffed food composition (sometimes referred to as a lowering rate in d90 in stirring, a percentage of decrease in d90 in stirring or a d90 crush ratio) is preferably equal to or greater than a predetermined value because an airy texture is imparted and sticking to teeth is suppressed. Specifically, the ratio of [(d90 before stirring) - (d90 after stirring)] / (d90 before stirring) is preferably equal to or greater than a predetermined value. The particle diameter d90 is obtained by measuring a 90% cumulative diameter in the 2 mass% aqueous dispersion liquid of the puffed food composition before stirring (that is, before ultrasonication) or after stirring (that is, after ultrasonication). D90 before and after stirring is measured on a volume basis (a volume-weighed distribution) as described above, and therefore represents a composition characteristic that particles in the entirety of the composition include a large number of particles having a large volume (typically, complexed particles), and the fact that the lowering rate in d90 is equal to or greater than a certain value shows a characteristic that the composition contains complexes having low linkage strength.

For example, the lowering rate in d90 (crush ratio) in the 2 mass% aqueous dispersion liquid of the puffed food composition during the ultrasonication of the puffed food composition of the present invention may be in the range of 10 mass% or more and 300% or less. More specifically, the lower limit of the lowering rate in d90 (crush ratio) in the 2 mass% aqueous dispersion liquid of the puffed food composition during the ultrasonication of the puffed food composition of the present invention is preferably 10% or more because a sufficiently strong complex is formed, so that the effect of the present invention is more markedly exhibited. The lowering rate in d90 is preferably, in particular, 14% or more, further more preferably 16% or more, further more preferably 18% or more, particularly preferably 20% or more. The upper limit of the lowering rate in d90 in the 2 mass% aqueous dispersion liquid of the puffed food composition during the ultrasonication of the puffed food composition of the present invention is not particularly limited, and it is preferably 90% or less, preferably, in particular, 80% or less, or 70% or less, or 65% or less, or 60% or less. The above-described definition may be satisfied in the step (i).

The particle diameter d90 is defined as a particle diameter such that when a particle diameter distribution is separated into two parts at a certain particle diameter, the ratio between a cumulative value of the particle frequency % on a larger-diameter side and a cumulative value of the particle frequency % on a smaller-diameter side is 10 : 90.

(Lowering rate in number-based average diameter in an ultrasonicated state on 2 mass% aqueous dispersion liquid of puffed food composition)

In the puffed food composition of the present invention, the lowering rate in number-based average diameter when the ultrasonication is performed on the 2 mass% aqueous dispersion liquid of the puffed food composition (sometimes referred to as a lowering rate in number-based average diameter in stirring or a number-based average diameter decrease percent in stirring) is preferably equal to or smaller than a predetermined value because a composition having a preferred texture is obtained. Specifically, the ratio of "[(number-based average diameter before stirring) - (number-based average diameter after stirring)] / (number-based average diameter before stirring)" is preferably equal to or smaller than a predetermined value. The number-based average diameter is obtained by measuring the number-based average diameter in the 2 mass% aqueous dispersion liquid of the puffed food composition before stirring (that is, before ultrasonication) or after stirring (that is, after ultrasonication). The fact that the lowering rate in number-based average diameter is equal to or smaller than a certain value shows a characteristic that relatively small particles contained in the composition include a certain number or more of particles which are not complexed.

For example, the lowering rate in number-based average diameter in the 2 mass% aqueous dispersion liquid of the puffed food composition during the ultrasonication of the puffed food composition of the present invention may be in the range of 0% or more and 60% or less. More specifically, the upper limit of the lowering rate in number-based average diameter in the 2 mass% aqueous dispersion liquid of the puffed food composition during the ultrasonication of the puffed food composition of the present invention is preferably 60% or less, in particular, 55% or less, further more preferably 50% or less. On the other hand, the lower limit of the lowering rate in number-based average diameter in the 2 mass% aqueous dispersion liquid of the puffed food composition during the ultrasonication of the puffed food composition of the present invention is not particularly limited, and it is preferably 0% or more, in particular, 10% or more.

(Measurement method for particle diameter)

The particle diameter of particles in the dispersion liquid after stirring, that is, after ultrasonication, of the dispersion liquid of the puffed food composition of the present invention is measured under the following conditions. First, as a solvent for the measurement, distilled water having little influence on the structure of a sample during measurement of the puffed food composition described later is used. That is, the dispersion liquid of the puffed food composition is preferably a 2 mass% aqueous dispersion liquid of the puffed food composition. For the measurement, a laser diffraction particle size distribution measurement apparatus is used which performs measurement over a range of at least from 0.02 μm to 2 000 μm by a laser diffraction scattering method. For example, Microtrac MT 3300 EX2 System from MicrotrackBEL Corp. is used, and as measurement application software, for example, DMSII (Data management System version 2 from MicrotrackBEL Corp.) is used. In measurement, when the measurement apparatus and software described above are used, the washing button in the software is depressed to perform washing, the Setzero button in the software is then depressed to perform zero setting, and a sample is directly introduced by sample loading until the concentration of the sample falls within a proper range. For a sample before stirring, that is, a sample which is not subjected to ultrasonication, the result of laser diffraction performed at a flow rate of 60% for a measurement time of 10 seconds immediately after the concentration of the sample is adjusted to be within a proper range within two sample loadings after introduction of the sample is taken as a measured value. On the other hand, for a sample after stirring, that is, when a sample subjected to ultrasonication is measured, the sample is introduced, and ultrasonication is performed by using the measurement apparatus, followed by measurement. In this case, a sample which has not been subjected to ultrasonication is introduced, the concentration is adjusted to be within a proper range by sample loading, and the ultrasonication button in the software is then depressed to perform ultrasonication. Thereafter, defoaming is performed three times, sample loading is performed again, it is confirmed that the concentration is still in the proper range, and laser diffraction is then rapidly performed at a flow rate of 60% for a measurement time of 10 seconds. The thus-obtained result is taken as a measured value. The parameters at measurement are set to, for example, display for distribution: volume, particle refractive index: 1.60, solvent refractive index: 1.333, measurement upper limit ($\mu$m) = 2 000.00 $\mu$m, measurement lower limit ($\mu$m) = 0.021 $\mu$m.

Unless otherwise specified, the sample to be used in measurement of the particle diameter of particles in the dispersion liquid of the puffed food composition of the present invention is a solution (2 mass% aqueous dispersion liquid) which is obtained by immersing 1 g of a puffed food composition sample in 50 g of distilled water at about 80°C, leaving the mixture to stand for about five minutes, and then thoroughly stirring the mixture with a spatula to suspend the sample and which passes through a sieve of 8 mesh (ASTM E11-04) having an aperture of 2.36 mm and a wire diameter (Wire Dia.) of 1.0 mm.

A particle diameter distribution for each channel (CH) is measured, and the particle diameter for each channel in Table 2 below is then used as a standard to determine various particle diameters of particles in the dispersion liquid of the puffed food composition in the present invention. Specifically, the frequency of particles having a particle diameter equal to or smaller than the particle diameter defined as each channel and larger than the particle diameter defined as a channel larger in number by 1 in Table 2 (a measurement lower limit particle diameter in the case of the maximum channel in the measurement range) is measured for each channel in Table 2 below, and divided by the total frequency of all channels in the measurement range to determine a particle frequency % of each channel (this is also referred to as "particle frequency % of channel XX"). For example, the particle frequency % of channel 1 represents a frequency % of particles having a particle diameter of 2 000.00 $\mu$m or less and more than 1 826.00 $\mu$m. In particular, the maximum particle diameter is determined as a particle diameter of a channel with the largest particle diameter among channels in which a particle frequency % is recognized in the results obtained by measuring a particle frequency % in each of 132 channels in Table 2 below. In other words, as conditions under which the maximum particle diameter of particles in the dispersion liquid of the puffed food composition is measured by using a laser diffraction particle size distribution measurement apparatus in the present invention, distilled water is used as a measurement solvent, and the particle diameter is measured soon after introduction of a sample with a measurement upper limit of 2 000.00 $\mu$m and a measurement lower limit of 0.021 $\mu$m.

[Table 2]

| Channel | Particle diameter ($\mu$m) | Channel | Particle diameter ($\mu$m) | Channel | Particle diameter ($\mu$m) | Channel | Particle diameter ($\mu$m) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |

(continued)

| Channel | Particle diameter (μm) | Channel | Particle diameter (μm) | Channel | Particle diameter (μm) | Channel | Particle diameter (μm) |
|---------|---------|---------|---------|---------|---------|---------|---------|
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

[Monosaccharide]

In the present invention, the term "monosaccharide" refers to a saccharide given the simplest structure by hydrolysis. Examples of the monosaccharide include, but are not limited to, glucose, xylose, mannose, galactose, arabinose, lyxose and fructose.

When the puffed food composition of the present invention is a non-fermentation puffed food composition in which a dough composition is not subjected to a fermentation step (for example, a product prepared by an extruder), the proportion of the monosaccharide content to the soluble carbohydrate content in the puffed food composition is preferably small from the viewpoint of shaping and the viewpoint of suppressing coloring when compressive shaping is performed under a heating condition of 60°C or higher. This ratio may be in the range of, for example, 0 mass% or more and 30 mass% or less. More specifically, the ratio is preferably 30 mass% or less, more preferably 25 mass% or less, further more preferably 20 mass% or less, particularly preferably 15 mass% or less, in terms of dry mass. On the other hand, the lower limit is not particularly limited, and it is 0 mass% or more, preferably 1 mass% or more, more preferably 2 mass% or more, further more preferably 3 mass% or more, further more preferably 4 mass% or more, further more preferably 5 mass% or more. The puffed food composition may satisfy the above-described definition. Further, in a fermentation puffed food composition heated at a relatively lower temperature as compared to a non-fermentation puffed food composition, the lower limit may be 0 mass% or more, or 1 mass% or more, or 2 mass% or more, or 3 mass% or more, or 4 mass% or more, or 5 mass% or more, and the upper limit may be 100 mass% or less, or 95 mass% or less.

When the puffed food composition is a non-fermentation puffed food composition in which a dough composition is not subjected to a fermentation step (for example, a product prepared by an extruder), the total content ratio of glucose and fructose, among the above-described monosaccharides, to the soluble carbohydrate content in the puffed food composition of the present invention may be in the range of, for example, 0 mass% or more and 30 mass% or less in terms of dry mass. More specifically, this total content ratio is preferably 30 mass% or less, more preferably 25 mass% or less, further more preferably 20 mass% or less, particularly preferably 15 mass% or less. On the other hand, the lower limit is not particularly limited, and it is 0 mass% or more, preferably 1 mass% or more, more preferably 2 mass% or more, further more preferably 3 mass% or more, further more preferably 4 mass% or more, further more preferably 5 mass% or more. The puffed food composition may satisfy the above-described definition. Further, in a fermentation puffed food composition heated at a relatively lower temperature as compared to a non-fermentation puffed food composition, the lower limit may be 0 mass% or more, or 1 mass% or more, or 2 mass% or more, or 3 mass% or more, or 4 mass% or more, or 5 mass% or more, and the upper limit may be 100 mass% or less, or 95 mass% or less.

Further, the proportion of the content of oligosaccharides (saccharides in which about 2 to 10 monosaccharides are linked together) to the soluble carbohydrate content in the puffed food composition of the present invention (in particular, a non-fermentation puffed food composition in which a dough composition is not subjected to a fermentation step) is preferably equal to or greater than a certain value from the viewpoint of shaping and the viewpoint of improving compressive shaping suitability under a heating condition of 60°C or higher. This ratio may be in the range of, for example, 1.0 mass% or more and 40 mass% or less. More specifically, the lower limit is 1.0 mass% or more, further more preferably 1.5 mass% or more, or 2.0 mass% or more, or 2.5 mass% or more, or 3.0 mass% or more, or 4.0 mass% or more, particularly preferably 5.0 mass% or more, in terms of dry mass. On the other hand, the upper limit is not particularly limited, and it is 40 mass% or less, preferably 35 mass% or less, more preferably 30 mass% or less, further more preferably 25 mass% or less, further more preferably 20 mass% or less, further more preferably 15 mass% or less. The above-described definition may be satisfied in the step (i).

The proportion of the total content of glucose and fructose to the soluble carbohydrate content in the puffed food composition of the present invention is measured in accordance with the method described in "Standard tables of food composition in Japan, 2015 (seventh edition), Analysis Manual" by using a high performance liquid chromatography method.

[Density]

The density (sometimes referred to as "bulk density" or "density specific gravity") of the puffed composition of the present invention is smaller than a predetermined value due to puffing, i.e., less than 1.0 g/cm$^3$. Specifically, the density (bulk density) of the composition of the present invention is preferably in the range of, for example, more than 0.04 g/cm$^3$ and less than 1.0 g/cm$^3$. More specifically, the upper limit thereof is preferably, in particular, 0.90 g/cm$^3$ or less, more preferably 0.85 g/cm$^3$ or less, further more preferably 0.80 g/cm$^3$ or less, further more preferably 0.75 g/cm$^3$ or less, further more preferably 0.70 g/cm$^3$ or less, particularly 0.65 g/cm$^3$ or less. From the viewpoint of maintaining the form, the lower limit is not particularly limited, and it is preferably 0.04 g/cm$^3$ or more, more preferably, in particular, 0.05 g/cm$^3$ or more, further more preferably 0.08 g/cm$^3$ or more, 0.10 g/cm$^3$ or more, further more preferably 0.12 g/cm$^3$ or more, further more preferably 0.15 g/cm$^3$ or more, further more preferably 0.17 g/cm$^3$ or more, further more preferably 0.20 g/cm$^3$ or more, further more preferably 0.24 g/cm$^3$ or more, particularly 0.27 g/cm$^3$ or more. The density of the composition in the present invention can be measured by a method apparently similar to that for bulk specific gravity. Specifically, as a method for measuring the density of a puffed food composition, the density is determined by dividing the mass of the composition by the volume of a virtual rectangular parallelepiped with the minimum volume in which the composition is inscribed, more specifically by dividing the weight of the composition by the apparent bulk volume of the composition (volume obtained by summing the "volume of the composition itself", the "volume of pores communicating with the outside on a composition surface", the "volume of inner gaps" and the "volume of gaps formed between the composition and a virtual rectangular parallelepiped with the minimum volume in which the composition is inscribed outside the composition"). For example, the approximate density can be measured by gently putting about 100 g of a sample in a 250 mL dry measuring cylinder (minimum scale value: 2 mL) without compacting the sample. The density value substantially coincides with a value of "specific gravity (ratio of the density of a substance to the density of water at 4°C under atmospheric pressure, which is 0.999972 g/cm$^3$)", and therefore may be defined by specific gravity obtained by removing the unit from a numerical value in the above-described definition.

[Dry amount-based water content]

For the moisture content (dry amount-based water content) in the puffed food composition in the present invention, the amount of moisture contained in a raw material and the amount of moisture added separately represent the total content of moisture remaining in the composition after puffing processing. The content may be in the range of, for example, 0 mass% or more and 50 mass% or less in terms of a ratio to the mass of the entirety of the puffed food composition (dry amount-based water content when the weight of a sample from which water is removed is defined as 100). Specifically, this content is preferably 50 mass% or less, more preferably 40 mass% or less, further more preferably 30 mass% or less, particularly preferably 20 mass% or less. The lower limit is not particularly limited, and it is preferably 0 mass% or more.

The dry amount-based water content is measured by heating a sample to 90°C by a method of thermal drying under reduced pressure in accordance with Standard tables of food composition in Japan, 2015 (seventh edition). Specifically, an appropriate amount of a sample is collected in a measuring container which has reached a constant mass (W0). The measuring container is weighed (W1), and put in an electric vacuum constant-temperature dryer adjusted to a predetermined temperature (specifically, 90°C) at normal pressure, where the container is uncapped or opened. The door is closed, a vacuum pump is actuated to perform drying at a predetermined degree of evacuation for a definite period of time, the vacuum pump is stopped, dry air is fed to bring the atmosphere back to normal pressure, and the measuring container is taken out, capped, and allowed to cool in a desiccator, followed by measurement of the mass. Such drying, cooling and weighing (W2) are repeated until the constant mass is attained, and the dry amount-based water content (mass%) is determined from the following equation.

$$\mathtt{Moisture\ (g/100\ g)\ =\ (W1-W2)/(W2-W0)\ \times\ 100}$$

wherein WO represents a mass (g) of a measuring container which has reached a constant mass, W1 represents a mass (g) of the measuring container containing a sample before drying, and W2 represents a mass (g) of the measuring container containing the sample after drying.

[Fat/oil]

The puffed food composition of the present invention may contain one or more kinds of fat/oil. The proportion thereof may be in the range of, for example, 0 mass% or more and 50 mass% or less in terms of dry mass. More specifically, this proportion is preferably 50 mass% or less, more preferably 40 mass% or less, further more preferably 30 mass% or less, particularly preferably 20 mass% or less. The lower limit is not particularly limited, and it is preferably 0 mass% or more. When two or more kinds of fat/oil are contained, the combination and the ratio of the two or more kinds of fat/oil are not limited. Examples of the type of fat/oil include edible fat/oil, various fatty acids, and food obtained by using any of such fat/oil and fatty acids as a raw material, and it is preferable to use edible fat/oil. The edible fat/oil may be one that is contained in a foodstuff, but it is preferable to add edible fat/oil independent of the foodstuff because good compatibility with the foodstuff is obtained. When edible fat/oil independent of the foodstuff is added, it is preferable to adjust the usage of such edible fat/oil independent of the foodstuff so that the edible fat/oil accounts for 10 mass% or more, in particular, 30 mass% or more of the total fat/oil content of the puffed food composition. The term "total fat/oil content" in the present invention means a mass ratio of all fat/oil in the puffed food composition (that is, all fat/oil including not only fat/oil blended during preparation of the puffed food composition, but also fat/oil contained food as a raw material and other optional components) to the entirety of the puffed food composition. The total fat/oil content is measured in accordance with a method described in "Food Labeling Standards (2015 Cabinet Office Ordinance No. 10)" by using a method of extraction with chloroform/methanol mixed liquid.

Specific examples of edible fat/oil include sesame oil, rape seed oil, high-oleic rape seed oil, soybean oil, palm oil, cotton seed oil, corn oil, sunflower oil, high-oleic sunflower oil, safflower oil, olive oil, linseed oil, rice oil, camellia oil, perilla oil, flavor oil, coconut oil, grape seed oil, peanut oil, almond oil, avocado oil, cacao butter, salad oil, canola oil, or MCT (medium chain fatty acid triglyceride), diglyceride, hardened oil, ester-exchanged oil, and animal fat/oil such as milk fat and beef tallow. In particular, edible fat/oil which is liquid at normal temperature (20°C), such as sesame oil, olive oil, rape seed oil, soybean oil, sunflower oil, rice oil, coconut oil and palm oil is preferable, and from the viewpoint of a taste, olive oil, coconut oil and rape seed oil are more preferable. It is preferable to adjust the usage of the liquid edible fat/oil so that the ratio thereof is 10 mass% or more, in particular, 30 mass% or more, or 50 mass% or more, or 70 mass% or more, or 90 mass% of the total fat/oil content of the puffed food composition. Specific examples of the food obtained by using various fatty acids as raw materials include butter, margarine, shortening, fresh cream, and soymilk cream (for example, "Ko-cream" (registered trademark) from Fuji Oil Co., Ltd.). The above-described definition may be satisfied in the step (i).

[Other conditions]

From the viewpoint of sticking to teeth, the puffed food composition of the present invention is preferably not a product prepared by cooking with oil in which a puffed food composition is fried or browned in heated fat/oil.

From the viewpoint of simplifying the production process, the puffed food composition of the present invention is preferably a product prepared by an extruder. The extruder will be described in a method for producing a puffed food composition as described later.

Further, from the viewpoint of more markedly exhibiting the effect of the present invention, it is preferable that the puffed food composition of the present invention contains a seed coat part which is a dietary fiber localized portion of the pulse. The seed coat part of the pulse is not a pod containing the pulse, but a coat having a film-like structure and covering the surface layer of the bean itself. The seed coat part of the pulse can be separated by a common husking machine or the like. The seed coat part of the pulse may be provided by using the pulse with a seed coat part, or independently by using a seed coat part separated from the pulse.

With regard to the pulse and/or millet for use in the present invention, their edible part and dietary fiber localized portion of an edible plant may be derived from different types of the pulse and millet, and from the viewpoint of consistency of taste, it is preferable to include an edible part and a dietary fiber localized portion derived from the same type of edible plant. Further, it is preferable to include an edible part and a dietary fiber localized portion derived from the same individual pulse and/or millet. That is, by using a part or all of an edible part and a part or all of dietary fiber localized portion derived from the same individual pulse and/or millet, such pulse and/or millet can be utilized without being wasted, and the dietary fiber localized portion can be eaten in a tasty way because the dietary fiber localized portion is rich in characteristic aroma inherent in the pulse. The dietary fiber localized portion is particularly preferably an insoluble dietary fiber localized portion.

Further, it is preferable that a powdered seed coat part (a dietary fiber localized portion) of the pulse with seed coat part (soybean, pea and the like), among pulses, be contained because a solid-state composition having a good taste (flavor release) is obtained. A powdered seed coat part of dry pulse and a residue obtained after removal of a seed coat part from an edible part (a seed leaf part and the like) may be derived from different types of pulse, and are preferably derived from the same type of pulse, further more preferably derived from the pulse of the same individual, from the viewpoint of consistency of taste. As a powdered seed coat part of dry pulse and a residue obtained after removal of a seed coat part from an edible part, those obtained by crushing the seed coat part and the residue separately may be used, or those obtained by collectively crushing dry pulse with a seed coat part may be used, or those obtained by crushing other edible plants to be crushed (dry vegetable, dry grain (in particular, dry millet, dry potato and dry fruit), together with a seed coat part of dry pulse and/or a residue obtained after removal of a seed coat part from an edible part may be used. It is particularly preferable that a seed coat of a pea, among pulses, be contained.

(Other components)

The puffed food composition of the present invention may contain, in addition the above-described various components, one or more other components. Examples of other components include seasoning, fat/oil, food additives, nutrient components and binding agents.

Examples of the nutrient component include vitamins (niacin, pantothenic acid, biotin, vitamin A, vitamin B1, vitamin B2, vitamin B6, vitamin B12, vitamin C, vitamin D, vitamin E, vitamin K, folic acid and the like), animal proteins derived from livestock meat, milk, eggs and the like, lipids (n-3 fatty acids such as $\alpha$-linolenic acid, EPA and DHA, n-6 fatty acids such as linoleic acid and arachidonic acid, and the like), and functional components such as dietary fibers and polyphenol. The content of nutrient components can be appropriately set according to a type thereof as long as the purpose of the present invention is not hindered.

The puffed food composition of the present invention is preferably substantially free of a binding agent. Examples of the binding agent include foodstuffs containing animal proteins such as eggs and milk, extracts thereof, normal phosphates such as monosodium phosphate and dipotassium phosphate, and polyphosphates such as sodium polyphosphate and sodium metaphosphate. In the puffed food composition of the present invention, an effect of suppressing scattering during eating is obtained without using such a binding agent. It is desirable to curb the use of such a binding agent from the viewpoint of providing quality which satisfies health-conscious consumers. In particular, eggs and/or milk are designated as specific raw materials in "Food Labeling Standards" (2015 Cabinet Office Ordinance No. 10), and also designated as allergens in foreign countries. Therefore, from the viewpoint of consumers who do not want an allergen, the configuration of being substantially free of egg, or the configuration of being substantially free of milk is preferable, and the configuration of being substantially free of both egg and milk is most preferable. Here, the term "substantially free of" means being not contained in an amount causing an effect as an allergen, for example, the term means that an amount of total protein of a specific raw material to be labeled in accordance with "Food Labeling Standards" (2015 Cabinet Office Ordinance No. 10) in Japan is not contained, more specifically, the content thereof is less than 10 ppm, which is an allergen label standard (more specifically, less than 1 ppm, which is the lower limit in a common measurement method).

Specifically, in the puffed food composition of the present invention, the content of binding agents, in particular, the content of components derived from eggs and/or milk is preferably 5 mass% or less, preferably, in particular, 3 mass% or less, further more preferably 1 mass% or less, particularly preferably substantially 0 mass% of the entirety of the puffed food composition. In the present invention, the term "component derived from eggs and/or milk" refers to the component derived from eggs and/or milk include eggs and/or milk in "Food Labeling Standards" (Consumer Affairs Agency Food Labeling Division Notification No. 139), Appendix "Labeling of Food Containing Allergens", Appended Table 1, specifically bird's eggs such as chicken eggs and eggs of ducks and quails, processed products of chicken eggs, milks such as raw milk, cow milk and processed milk, dairy products such as cream, butter, cheese, ice cream, condensed milk, milk powder, cream powder, whey powder, fermented milk, lactic acid bacteria beverages and milk beverages, and food with milk or a milk product as a main raw material.

Preferably, the content of any one selected from the group consisting of components selected from the group consisting of an emulsifier, a coloring agent and a thickening agent as so-called food additives (for example, food additives described as "coloring agents", "thickening agents" and "emulsifiers" in Food Additive Labeling Pocket Book (2011 edition), "List of Food Additive Substances to be Labeled", in the puffed food composition of the present invention, is normally 1.0 mass% or less, in particular, 0.5 mass% or less, further more preferably 0.1 mass% or less in terms of dry mass, and particularly, the puffed food composition is substantially free of such an additive (specifically, it means that the content is less than 10 ppm, which is an allergen label standard, in particular, less than 1 ppm, which is the lower limit in a common measurement method), or free of such an additive. More preferably, the content of any two of the additives is normally 1.0 mass% or less, in particular, 0.5 mass% or less, further 0.1 mass% or less, and particularly, the puffed food composition is substantially free of such additives (specifically, it means that the content is less than 10 ppm, which is an allergen label standard, in particular, less than 1 ppm, which is the lower limit in a common measurement method), or free of such additives. Further more preferably, the content of all of the three additives is normally 1.0 mass% or less, in particular, 0.5 mass% or less, or 0.1 mass% or less, and particularly, the puffed food composition is substantially free of such additives (specifically, it means that the content is less than 10 ppm, which is an allergen label standard, in particular, less than 1 ppm, which is the lower limit in a common measurement method), or free of such additives. Particularly preferably, the content of food additives is normally 1.0 mass% or less, in particular, 0.5 mass% or less, or 0.1 mass% or less, and particularly, the puffed food composition is free of food additives. The above-described definition may be satisfied in the step (i).

Cellulose as a food additive (obtained by acid hydrolysis or alkali oxidation decomposition of cellulose and having a substantially constant polymerization degree; the polymerization degree is typically 100 to 300; examples of the commercial product thereof include Avicel (ASAHI KASEI CORPORATION)) in the puffed food composition of the present invention is preferably 5 mass% or less, more preferably, in particular, 3 mass% or less, further 1 mass% or less, particularly substantially 0 mass% of the entirety of the puffed food composition.

Examples of the seasoning, the food additive and the like include soy sauce, fermented soybean paste, alcohols, common salt, artificial sweeteners (for example, sucralose, aspartame, saccharine and Acesulfame), minerals (for example, zinc, potassium, calcium, chromium, selenium, iron, copper, sodium, magnesium, manganese, iodine and phosphorus), fragrances, spices, pH adjusters (for example, sodium hydroxide, potassium hydroxide, lactic acid, citric acid, tartaric acid, malic acid and acetic acid), dextrin, cyclodextrin, antioxidants (for example, tea extract, green coffee bean extract, chlorogenic acid, spice extract, caffeic acid, rosemary extract, rutin, quercetin, bayberry extract and sesame extract), emulsifiers (for example, glycerin fatty acid esters, saponin, sucrose fatty acid esters and lecithin), coloring agents, thickening agents, saccharides (glucose, sucrose, fructose, glucose fructose syrup and fructose glucose syrup), sugar alcohols (xylitol, erythritol and maltitol).

From the viewpoint of providing quality satisfying health-conscious consumers, it is particularly desirable that the puffed food composition of the present invention be substantially free of food additives (for example, substances described in Food Additive Labeling Pocket Book (2011 edition), "List of Food Additive Substances to be Labeled" and used for food additives). Specifically, the content of the food additives in the puffed food composition of the present invention is preferably 5 mass% or less, more preferably, in particular, 3 mass% or less, further 1 mass% or less, particularly substantially 0 mass%, in terms of dry mass, of the entirety of the puffed food composition. The content of the seasoning can be appropriately set according to the type thereof as long as the purpose of the present invention is not hindered.

(Other foodstuffs)

The puffed food composition of the present invention may contain, in addition to the pulse and/or millet and edible plants, other foodstuffs. Specifically, the other foodstuffs mentioned here are foodstuffs and ingredients larger in size than 2 000 μm (2 mm), which are not targets for laser diffraction particle diameter distribution measurement. Examples of such other foodstuffs include plant foodstuffs, microbial foodstuffs and animal foodstuffs, and any of these foodstuffs may be used. These foodstuffs may be used alone, or used in any combination of two or more thereof. These food stuffs may be used as such, or used after application of various treatments (for example, drying, heating, removal of harshness, peeling, removal of seeds, ripening, salting and pericarp processing). The content of the other foodstuff can be appropriately set in accordance with the type thereof as long as the purpose of the present invention is not hindered. The above-described definition may be satisfied in the step (i).

[Method for producing puffed food composition]

The method for producing a puffed food composition according to the present invention is not particularly limited, and any method can be used as long as a puffed food composition satisfying the above-described various requirements can be obtained. The puffed food composition of the present invention can be efficiently produced by, for example, preparing a dough composition by mixing the materials for the puffed food composition of the present invention, for example, pulses and edible plants, other foodstuffs which are optionally used, and other components, followed by expansion of voids in the dough composition.

More specifically, mention can be made of, for example, a method for producing a puffed food composition containing a pulse and an edible plant, the method including the following steps (i) and (ii):

(i) preparing a dough composition satisfying all of following characteristics (1) to (5):

(1) the content of an edible part of finely ground pulse and/or millet and a dietary fiber localized portion of an edible plant is 10 mass% or more in terms of dry mass;
(2) starch is contained at 5 mass% or more in terms of dry mass;
(3) the content of a dietary fiber (in particular, an insoluble dietary fiber) is 3 mass% or more in terms of dry mass;
(4) the content of protein is 4 mass% or more in terms of dry mass; and
(5) the content of a soluble carbohydrate being contained in one or more edible plants selected from the group consisting of pulse, millet, potatoes, seeds, vegetables and fruit is 2 mass% or more in terms of dry mass; and (ii) expanding voids in the dough composition from (i).

(Step (i))

In the step (i), the pulse and edible plant, other foodstuffs which are optionally used, and other components are mixed, and adjustment is performed so that the contents of dietary fibers (in particular, insoluble dietary fibers), starch, a soluble carbohydrate and protein are within the above-described ranges.

In the present invention, it is preferable that the pulse and edible plant subjected to drying in advance, that is, dried foodstuffs be used as the pulse and edible plant and other foodstuffs which are optionally used, from the viewpoint of ease of handling.

As a method for drying a foodstuff, any method which is commonly used for drying food can be used. Examples thereof include solar drying, drying in the shade, freeze-drying, air drying (for example, hot-air drying, fluidized bed drying, spray drying, drum drying and cold drying), press drying, drying under reduced pressure, microwave drying and oil heat drying. Among them, the methods of air drying (for example, hot-air drying, fluidized bed drying, spray drying, drum drying and cold drying) or freeze-drying are preferable because the degree of change in color and taste inherent in a foodstuff is small, and odors other than those of food (scorched odor and the like) can be controlled.

As edible plants and other foodstuffs which are optionally used, those ground in advance may be used. The means for grinding is not particularly limited, and there is no limitation on the temperature and pressure during the grinding. Examples of the apparatus for grinding include equipment such as blenders, mixers, mills, kneading machines, grinding machines, crushing machines and mashing machines. Any of these may be used, and the grinding may be carried out by either dry grinding or wet grinding. The specific configurations of raw materials such as edible plants, dietary fibers (in particular, insoluble dietary fibers), starch and protein are as described above.

In the step (i), the pulse and edible plant subjected to drying in advance, i.e., dried foodstuffs may be used in a form of a granular raw material complex obtained by granulating the foodstuffs by kneading in advance, and optionally performing drying. The size of the granular complex is not particularly limited, and it is preferably a size described in [Pre-puffing dough composition of puffed food composition of present invention] described below.

(Step (ii))

In the step (ii), a composition having an airy texture can be obtained by expanding voids in the dough composition obtained in the step (i). More specifically, it is possible to employ a method for producing a puffed food composition in which the step (ii) includes steps (I) and (II):

step (I): kneading the composition from (i) at a temperature of 100°C or higher under a pressurized condition; and
step (II): bringing the composition from (I) back to normal pressure at a temperature of 100°C or higher.

(Step (I))

In the step (I), the dough composition obtained in the step (i) is kneaded at a temperature of 100°C or higher under a pressurized condition. Kneading the dough composition under such a high-temperature and pressurized condition promotes formation of a complex of dietary fibers (in particular, insoluble dietary fibers), starch, protein and the like, so that control is easily performed to obtain desired characteristics. It is preferable that this temperature be high to the extent that the dough composition is not scorched.

The temperature during kneading may be in the range of, for example, 100°C or higher and 300°C or lower. More specifically, the lower limit is normally 100°C or higher, preferably, in particular, 105°C or higher, further more preferably 110°C or higher, particularly preferably 115°C or higher. When the lower limit temperature during kneading is in the above-described range, it is possible to ensure that the puffed food composition is not sticky and has an airy texture. In particular, the lower limit temperature is preferably 140°C or higher for the pulse. On the other hand, the upper limit of the temperature during kneading is normally 300°C or lower, preferably 250°C or lower, further more preferably 200°C or lower, further more preferably 190°C or lower, further more preferably 180°C or lower, further more preferably 170°C or lower, further more preferably 165°C or lower, further more preferably 160°C or lower, particularly 155°C or lower. When the upper limit temperature during kneading is in the above-described range, it is possible to ensure that the puffed food composition is not excessively hard and has an airy texture.

The pressure during kneading may be in the range of, for example, 0.1 MPa or more and 50 MPa or less. More specifically, the lower limit is normally 0.1 MPa or more, further more preferably 0.3 MPa or more, further more preferably 0.5 MPa or more, further more preferably 1 MPa or more, further more preferably 2 MPa or more, further more preferably 3 MPa or more. On the other hand, the upper limit of the pressure during kneading may be appropriately set depending on the requirements of pressure resistance of pressure equipment, and the like, and may be, for example, 50 MPa or less.

The time of kneading may be appropriately set in accordance with the temperature and the pressure of kneading, the size of a kneading container, and the like, and may be generally in the range of, for example 0.5 minute or more and 60 minutes or less. More specifically, the lower limit of the time of kneading is normally 0.5 minute or more, preferably 0.8 minute or more, more preferably 1 minute or more, further more preferably 2 minutes or more. On the other hand, the upper limit of the time of kneading is normally 60 minutes or less, preferably 30 minutes or less, further more preferably 15 minutes or less.

(Step (II))

In the step (II), the composition after the step (I) is brought back to normal pressure at a composition temperature of 100°C or higher. The temperature in the step (II) may be in the range of, for example, 100°C or higher and 300°C or lower. More specifically, the lower limit is normally 100°C or higher, preferably, in particular, 105°C or higher, further more preferably 110°C or higher, particularly preferably 115°C or higher. The upper limit is not particularly limited, and it is normally 300°C or lower, 250°C or lower, further more preferably 200°C or lower, further more preferably 190°C or lower, further more preferably 180°C or lower, further more preferably 170°C or lower, further more preferably 165°C or lower, further more preferably 160°C or lower, particularly 155°C or lower. By decompressing the composition while maintaining a composition temperature equal to or higher than a certain value, moisture in the composition is rapidly evaporated, so that the composition is easily puffed. Therefore, it is preferable that the composition after the step (I) be rapidly released to normal pressure from the pressurized condition while being maintained at a temperature equal to or higher than a predetermined value.

The temperature and pressure conditions when the pressure is brought back to normal pressure are not particularly limited as long as puffing of the composition can be promoted, and normally, the temperature in the step (II) is preferably equal to or lower than the temperature in the step (I), more preferably lower by 10°C or more than the temperature in the step (I). The lowering of the temperature may be achieved by drawing heat from the composition due to rapid evaporation of moisture in the composition in the step (II).

(Extruder)

By the above-described production method of the present invention, the puffed food composition of the present invention can be produced, and it is preferable to use an extruder for kneading under a high-temperature condition (the step (I) and the step (II)). That is, when the step (I) and the step (II) are carried out by using an extruder, it is normally unnecessary to control the pressure condition to satisfy the above-described range, and the temperature condition can be efficiently adjusted to and maintained in the above-described range. Thus, by using an extruder, the puffed food composition of the present invention can be efficiently and conveniently produced.

The type of the extruder is not particularly limited, and it is preferably one that enables the treatments of adding water, kneading, heating, cooling and extrusion shaping to be performed in a single unit. Specifically, either a single-screw extruder or a twinscrew extruder can be used, and from the viewpoint of industrial productivity, it is preferable to use a twinscrew extruder.

When the production method of the present invention is carried out by an extruder, the conditions thereof are as follows.

In the step (i), raw materials for preparation of a dough composition are introduced into an extruder, and mixed. Normally, into the extruder, solid-state materials such as finely-ground edible plants, which are raw materials, are first introduced, and water is then introduced.

The time of retention of the introduced raw materials in the extruder (time of retention in the barrel until discharge from the outlet after introduction into the barrel) may be appropriately adjusted in consideration of a barrel internal volume, a barrel internal pressure and the like. The time of retention is not particularly limited, and it may be in the range of, for example, 0.5 minute or more and 60 minutes or less. More specifically, from the viewpoint of further enhancing the effect of the present invention, the time of retention is normally 0.5 minute or more, preferably 0.8 minute or more, more preferably 1 minute or more, further more preferably 2 minutes or more, further more preferably 3 minutes or more, and normally 60 minutes or less, preferably 30 minutes or less, further more preferably 15 minutes or less.

The feed flow rate of raw materials introduced into the extruder is not particularly limited, and it may be appropriately adjusted in consideration of a barrel internal volume, a retention time, a barrel internal pressure and the like. The feed flow rate may be in the range of, for example, 0.06 kg or more per hour and 1 000 kg or less per hour. More specifically, the feed flow rate may be normally 0.06 kg or more per hour, preferably 0.1 kg or more per hour, more preferably 0.2 kg or more per hour, further more preferably 0.3 kg or more per hour, and normally 1 000 kg or less per hour, preferably 800 kg or less per hour, more preferably 600 kg or less per hour, further more preferably 400 kg or less per hour.

The amount of water introduced into the extruder can be appropriately adjusted according to desired physical properties of the dough composition, and it is preferable to appropriately incorporate water in addition to moisture contained in raw materials such as pulses and/or millet so that the dry amount-based water content (water content when the weight of the sample free of water, which is divided by a solid content weight obtained by subtracting the weight of water from the weight of the dough composition, is defined as 100) of the dough composition in the step (i) is a predetermined ratio. For example, the dry amount-based water content may be in the range of 3 mass% or more and 100 mass% or less. More specifically, the lower limit of the dry amount-based water content in the dough composition is preferably 3 mass% or more, in particular, 5 mass% or more, further more preferably 7 mass% or more, particularly preferably 10 mass% or more. The upper limit is not particularly limited, and it is normally 100 mass% or less, preferably 80 mass% or less, more preferably 60 mass% or less, further more preferably 40 mass% or less, further more preferably 30 mass% or less.

In the step (I), the dough composition is kneaded under pressurization at a high temperature by using an extruder. The temperature conditions during kneading are as described above, and the temperature is preferably within the above-described temperature range during majority of the time of retention in the extruder barrel. The pressurized condition during kneading is as described above, it is normally unnecessary to control the pressure because normally, the pressurized condition is satisfied when kneading is performed by using an extruder. The screw speed of the extruder during the kneading is not particularly limited, and it can be set to a general condition. For example, it is desirable that the screw speed be within the range of from 50 to 1 000 rpm (for example, about 250 rpm).

In the step (II), the composition obtained by performing kneading under a high-temperature and pressurized condition is brought back to normal pressure by a method in which the composition is subjected to extrusion shaping and the like under normal pressure while the temperature is maintained. Consequently, moisture in the composition is precipitously expanded and evaporated to puff the composition, so that it is possible to efficiently and conveniently produce a puffed food composition in which the particle diameter of particles before and after stirring is controlled to fall within the above-described range.

Further, a desired shape is formed during or after puffing in the step (II), and the puffed food composition of the present invention has a characteristic that the composition after puffing is easily subjected to compressive shaping. In particular, since even a composition after puffing can be shaped without any problem, the present invention includes compressively shaped puffed food composition processed products.

Specific examples include puffed food composition processed products obtained by filling contents into an internal space of a puffed food composition formed in a shape which enables contents to be filled into the inside of the composition, such as a bag form or a tubular form, and then sealing the opening by compressive shaping, and puffed food composition processed products obtained by integrating puffed food compositions of a plurality of shapes by compressive shaping.

(Step (III))

In the method for producing a puffed food composition, the step (ii) may include steps (III) and (IV):

step (III): performing yeast fermentation on the dough composition from (i) and/or mixing a puffing agent; and
step (IV): firing the dough from (III).

Specifically, in the step (III), the volume of the dough composition obtained in the step (i) is increased by subjecting the dough composition to heating and fermentation with yeast or the like, so that a composition having an airy texture is obtained, which is preferable.

The puffing agent in the step (III) can be used under arbitrary conditions by a method known in the art. Normally, baking powder may be used. Baking powder contains sodium bicarbonate, which generates carbon dioxide gas, as a base (gas generating agent), and an acidic agent as an auxiliary agent for helping decomposition of the sodium bicarbonate. The puffing agent includes fast-acting (quick-acting) puffing agents which generate a large amount of gas at a low temperature, slow-acting puffing agents which generate a large amount of gas after reaching a high temperature, intermediate puffing agents placed between quick-acting and slow-acting puffing agents, and sustained puffing agents capable of withstanding a long heating time for thorough baking, and any of the puffing agents may be used.

The fermentation method in the fermentation of the step (III) is not particularly limited, and it can be performed under arbitrary conditions by a method known in the art. Normally, the dough composition may be mixed with yeast, followed by holding the mixture at a predetermined temperature for a predetermined time. The fermenting yeast is not limited, and examples thereof include sake yeast, bread yeast, beer yeast and wine yeast. The fermentation temperature is not limited, and may be in the range of, for example, 0°C or higher and 60°C or lower. More specifically, the fermentation temperature is normally 0°C or higher, in particular, 4°C or higher, further more preferably 10°C or higher. The upper limit is not particularly limited, and it may be normally 60°C or lower, in particular, 50°C or lower. The fermentation time is not limited, and may be normally in the range of, for example, 30 minutes or more and 36 hours or less. More specifically, the fermentation time may be normally 30 minutes or more, in particular, 60 minutes or more, and normally 36 hours or less, in particular, 24 hours or less. The amount of blending of the yeast can be arbitrary adjusted according to a fermentation time and temperature, and may be 0.01 mass% or more and 10 mass% or less in terms of dry mass in the dough composition. More specifically, the lower limit thereof is preferably 0.01 mass% or more, in particular, 0.05 mass% or more, further more preferably 0.1 mass% or more, or 0.2 mass% or more, or 0.3 mass% or more, particularly preferably 0.4 mass% or more. The upper limit is not particularly limited, and it is normally 10 mass% or less, preferably 8 mass% or less, more preferably 6 mass% or less, further more preferably 4 mass% or less, further more preferably 3 mass% or less, particularly preferably 2 mass% or less.

(Step (IV))

The method of firing in (step (IV)) is not particularly limited, and it is possible to use a waffle plate for a hot sand maker in which a dough is sandwiched and baked, or a microwave oven having a heating function, and the like.

When a waffle plate for a hot sand maker is used in (step (IV)), the firing is performed at a composition temperature of 100°C or higher. The temperature may be in the range of, for example, 100°C or higher and 200°C or lower. More specifically, the lower limit of the temperature is normally 100°C or higher, preferably, in particular, 105°C or higher, further more preferably 110°C or higher, particularly preferably 115°C or higher. The upper limit is not particularly limited, and it is normally 200°C or lower.

When a microwave oven is used in (step (IV)), the firing is performed at a composition temperature of 100°C or higher. The temperature may be in the range of, for example, 100°C or higher and 240°C or lower. More specifically, the lower limit of the temperature is normally 100°C or higher, preferably, in particular, 105°C or higher, further more preferably 110°C or higher, particularly preferably 115°C or higher. The upper limit is not particularly limited, and it is normally 240°C or lower.

Further, the present invention includes a method in which a puffed food composition is compressively shaped at a temperature equal to or higher than a predetermined value, and puffed food composition processed products obtained by the method. Specifically, the present invention includes a method in which a step (V) is carried out after the step (ii) in production of a puffed food composition processed product. That is, the present invention includes, as the step (V), a method in which compressive shaping is performed in a temperature range of, for example, 60°C or higher and lower than 100°C. More specifically, the present invention includes a method in which a composition after puffing is compressively shaped at 60°C or higher (more preferably 70°C or higher, further more preferably 80°C or higher; and the upper limit is not particularly limited, and it is normally less than 100°C) .

In compressive shaping of the composition, by compression of the composition due to compressive shaping, the composition may be pressed in a state of contact between composition openings, between two or more compositions or between the composition and contents other than the composition until the volume of the composition decreases to a range of, for example, more than 0% and 50% or less after the compression. An aspect in which compositions are compressively shaped together (aspect in which the composition is pressed in a state of contact between composition openings and between two or more compositions) is preferable because the composition is compressively shaped more firmly. More specifically, the composition may be pressed in a state of contact between composition openings or between two or more compositions until the volume decreases to 50% or less (more preferably 40% or less, further more preferably 30% or less, further more preferably 20% or less, further more preferably 10% or less; and the lower limit is not particularly limited, and it is normally more than 0%). The pressure at which the composition is compressed during compressive shaping is not particularly limited, and it is preferably 1 MPa or more, and the upper limit thereof is not particularly limited, and it is preferably 100 MPa or less. The time required for compressive shaping is not particularly limited, and it is preferably 1 second or more, and the upper limit is not particularly limited, and it is preferably 100 seconds or less.

It is preferable that after the puffing (expanding voids) in the step (ii), d90 after the stirring (representing the same meaning as the measured value in an ultrasonicated state, or the measured value after ultrasonication) increases by a ratio equal to or greater than a predetermined value (that is, the ratio of increase defined by "(d90 after stirring in composition after puffing - d90 after stirring in dough composition before puffing) / d90 after stirring in dough composition before puffing" be equal to or greater than a certain numerical value).

For example, the ratio of increase may be in the range of 40% or more and 1 000% or less after the puffing in the step (ii). More specifically, such a value is normally 40% or more, preferably, in particular, 45% or more, further more preferably 50% or more, particularly 55% or more, or 60% or more, or 65% or more, or 70% or more after the puffing in the step (ii). The reason for this is unknown, but a gelatinized strong starch structure may be formed by processing during the puffing. The upper limit is not particularly limited, and it may be, for example, normally 1 000% or less, or 700% or less, or 350% or less. In the present invention, unless otherwise specified, the term "before puffing" means a state of the dough composition in the step (i), and the term "after puffing" means a state of the puffed composition after completion of the step (ii).

It is preferable that after the puffing in the step (ii), the lowering rate in d90 (crush ratio) in a 2 mass% aqueous dispersion liquid of the puffed food composition during the ultrasonication increases by a ratio equal to or greater than a predetermined value (that is, the ratio of increase defined by "(crush ratio in composition after puffing - crush ratio in dough composition before puffing) / crush ratio in dough composition before puffing" be equal to or greater than a certain numerical value).

For example, the ratio of increase may be in the range of more than 30% and 1 000% or less after the puffing in the step (ii). More specifically, such a value is normally more than 30%, preferably, in particular, more than 35%, further more preferably more than 40%, particularly more than 45%, or more than 50%, or more than 55%, or more than 60% after the puffing in the step (ii). The reason for this is unknown, but a gelatinized strong starch structure may be formed by processing during the puffing. The upper limit is not particularly limited, and it may be, for example, normally 1 000% or less, or 700% or less.

It is preferable that after the puffing in the step (ii), the number-based average diameter when the ultrasonication is performed increase by a ratio equal to or smaller than a predetermined value (that is, the ratio of increase defined by "(number-based average diameter after stirring in composition after puffing - number-based average diameter after stirring in dough composition before puffing) / number-based average diameter after stirring in dough composition before puffing)" be equal to or smaller than a certain numerical value).

For example, the ratio of increase may be in the range of more than 0% and 60% or less after the puffing in the step (ii). More specifically, such a value is normally 60% or less, preferably, in particular, 55% or less, further more preferably 50% or less after the puffing in the step (ii). The reason for this is unknown, but in addition to a strong starch structure formed by processing during puffing, fine particles may be held, resulting in exhibition of a preferred texture. The lower limit is particularly limited, and it may be, for example, normally more than 0%, or 10% or more.

[Food containing puffed food composition of present invention]

The present invention further encompasses food containing the puffed food composition of the present invention. Specific examples thereof include, but are not limited to, confections, rice biscuits, nutrition bars obtained by kneading the puffed food composition of the present invention into dough, puffed food compositions with contents (puffs and the like) in which contents other than a puffed material (chocolate and the like) are encapsulated in a puffed food composition shaped in a form enabling contents to be filled into an internal space (corresponding to a content part of a bag or am internal space part extending through a tube) shaped by the composition, such as a bag form or a tubular form, puffed food compositions with contents (bread, bread-like food, sandwiches and the like) in which contents other than a puffed material (egg salad, or ingredients such as vegetables and Vienna sausage) are encapsulated in an internal space (corresponding to a content part of a bag) shaped by a puffed food composition in a bag form by compressively laminating the edges of two puffed materials in a flat plate shape, and puffed food compositions with sandwiched contents (bread, bread-like food, sandwiches and the like) in which contents other than a puffed material (egg salad, or ingredients such as vegetables and Vienna sausage) are filled into a groove part of a puffed composition provided with a V-shape groove or a U-shape groove, and the puffed composition and the contents are compressively shaped by hand or a machine. The food may be a puffed food composition with sandwiched contents (bread, bread-like food, sandwiches and the like) in which contents other than a puffed material (egg salad, or ingredients such as vegetables and Vienna sausage) are filled into a groove part of a dough composition provided with a V-shape groove or a U-shape groove, and the dough composition is expanded by a subsequent processing step (for example, firing step), so that the puffed material and the contents are compressively bonded, and ultimately integrated.

[Pre-puffing dough composition of puffed food composition of present invention]

From the viewpoint of productivity, it is preferable that the dough composition described in the step (i) be used in a form of a granular complex having a size equal to or greater than a predetermined value and formed from one or more edible plants selected from the group consisting of the above-described materials, that is, finely ground pulse and/or millet, and/or grain, potatoes, seeds, vegetables and fruit. Specifically, use of a granular complex prepared by, for example, mixing the pulse and edible plant with optionally used other foodstuffs and other components, and granulated by kneading enables stable production when extruder processing is performed. The granular complex may be optionally subjected to drying after the granulation.

The granular complex is characterized by granular complex fractions of specific mesh-on and/or specific mesh-pass obtained by sieve fractionation. In the present invention, the term "mesh-on" refers to a granular complex fraction which remains on a specific size sieve, and the term "mesh-pass" refers to a granular complex fraction which passes through a specific size sieve. The content of each fraction is measured by fractioning granular complexes with sieves having different apertures. For example, the term "50 mesh-on" means a granular complex fraction which remains on a 50 mesh sieve, and the term "0.1 mesh-pass and 50 mesh-on" means a granular complex fraction which passes through a 0.1 mesh sieve and remains on a 50 mesh sieve. The term "mesh" in the present invention refers to a unit representing a density of openings of a woven wire, a sieve, a filter or the like, and means the number of meshes per inch. That is, for example, the term "1 mesh-on (pass)" means a granular complex fraction which remains on (passes through) a sieve having an aperture of 2.50 centimeters, the term "0.1 mesh-on (pass)" means a granular complex fraction which remains on (passes through) a sieve having an aperture of 25.0 centimeters, and the term "50 mesh-on (pass)" means a granular complex fraction which remains on (passes through) a sieve having an aperture of 300 micrometers.

Specifically, the wire thickness and the opening interval in the mesh-on are set to numerical values defined in U.S.A. standard testing Sieves ASTM Specifications E 11-04 (for example, 50 mesh corresponds to "No. 50" defined in "Alternatives" in Nominal Dimensions, Permissible Variation for Wire Cloth of Standard Testing Sieves (U.S.A.) Standard Series in the above-mentioned literature, and 1 mesh corresponds to 1.00"), or equivalent numerical values, and 100 g of a sample (20°C) containing a granular complex to be measured is evenly spread on an uppermost sieve having the largest aperture, among sieves vertically stacked in descending order of the aperture, and is treated until the weight of the fraction on each sieve becomes constant while the sample is vibrated with a load which does not change the composition size. In this way, the size can be measured.

The size of the granular complex fraction in the present invention may be in the range of, for example, 50 mesh-on and 0.1 mesh-pass. More specifically, it is preferable that the lower limit be normally 50 mesh-on because the feed rate during kneading is stabilized. The lower limit is preferably, in particular, 42 mesh-on, further more preferably 36 mesh-on, further more preferably 30 mesh-on, further more preferably 26 mesh-on, further more preferably 22 mesh-on, particularly preferably 18 mesh-on. On the other hand, the upper limit of the size of the granular complex in the present invention is not particularly limited, and it is normally 0.1 mesh-pass, preferably, in particular, 0.5 mesh-pass, further more preferably 1 mesh-pass.

It is preferable that a granular complex fraction having the relevant size (for example, a fraction having a size of 50 mesh-on and 0.1 mesh-pass) be contained, for example, at 10 mass% or more and 100 mass% or less of the entirety of the dough composition in terms of dry mass because the feed rate during kneading is stabilized. More specifically, the content preferably 10 mass% or more, in particular, 20 mass% or more, further more preferably 30 mass% or more, further more preferably 40 mass% or more, further more preferably 50 mass% or more, or 60 mass% or more, or 70 mass% or more, or 80 mass% or more, further more preferably 90 mass% or more. The upper limit is not particularly limited, and it is normally 100 mass% or less, preferably less than 100 mass%.

Examples

Hereinafter, the present invention will be described in more detail by way of Examples, but these Examples are merely examples given conveniently for illustration purpose only, and the present invention is in no way limited to these Examples.

[Preparation of puffed food composition sample]

Puffed food composition samples of Comparative Examples and Test Examples were prepared by using materials shown in Tables 3 to 6 below. Grain, potatoes, seeds, vegetables and fruit were used in which a soluble carbohydrate (sucrose) being contained in edible plants are contained in a large amount (at 1 mass% or more) and other natural components (components other than the soluble carbohydrate) are contained. In Table 3, the relevant foodstuff names are suffixed with "*". Specifically, finely ground products (powder) of yellow peas (containing a seed coat as an insoluble dietary fiber localized portion at 0.1 mass%), yellow peas (without seed coats), chickpeas (containing seed coats as an insoluble dietary fiber localized portion at 1 mass%), white beans (containing a seed coat as an insoluble dietary fiber localized portion at 2 mass%), broad beans (containing a seed coat as an insoluble dietary fiber localized portion at 0.1 mass%), white peas (containing a seed coat as an insoluble dietary fiber localized portion at 1 mass%) and mung beans (containing a seed coat as an insoluble dietary fiber localized portion at 0.1 mass%) as a kind of pulse, and a dried product of quinoa, common millet, an oat (Avena sativa) and sweet corn (all of non-edible part and edible part) as a kind of millet, a beet (a beet root, all of non-edible part and edible part) and a cabbage (all of non-edible part and edible part) as a kind of vegetables, an almond as a kind of seed, a mango as a kind of fruit, and a sweet potato as a kind of potato were dry-treated to at least a water active value of 0.95 or less, and powdered. As an edible part of the foodstuff, a part generally served for eating/drinking (a part other than a non-edible part) was used, and as a non-edible part of some foodstuffs, a root end, a skin and a leafstalk of beet root, core of cabbage, and cob of sweet corn were used. The obtained dry powder was appropriately mixed with rice starch powder and brown rice powder as a kind of processed products of edible plants containing starch as a main component, wheat powder containing protein as a main component, rapeseed oil as a kind of fat/oil, date juice, beet juice, banana juice and persimmon juice which are processed products of edible plants containing a soluble carbohydrate and in which a soluble carbohydrate (sucrose) being contained in edible plants are contained in a large amount (at 1 mass% or more) and other natural components (components other than the soluble carbohydrate) are contained, psyllium husk powder treated with an enzyme (pectinase G "Amano" manufactured by Amano Enzyme Inc.) as a dietary fiber localized portion of vegetables (fleawort), refined sucrose as a kind of refined saccharides, cellulose powder as a kind of insoluble dietary fibers, bread yeast for producing a bread-like composition, and sodium hydrogen carbonate, in accordance with raw material blending ratios shown in Tables 3 to 6, and water was then appropriately added to the "dry amount-based water content (mass%)" in the tables to prepare dough compositions. For Test Examples 1 to 7, Comparative Example 8, Test Examples 9 to 22, Comparative Examples 23 to 25, Test Example 26, Test Example 27, Comparative Example 28 and Comparative Example 29, a step (I) of kneading the dough composition at a temperature of 100°C or higher under a pressurized condition by an extruder was carried out, and a step (II) of bringing the dough composition back to normal pressure at a temperature of 100°C or higher was then carried out to expand voids in the dough composition.

Specifically, as a step of kneading the prepared dough composition at a temperature of 100°C or higher under a pressurized condition by using a twin-screw extruder manufactured by suehiroepm Inc as an extruder., the dough composition was kneaded under pressurization in such a manner that the outlet temperature was 120°C (I), and the composition from the step (I) was then extruded at a temperature of 100°C or higher under normal pressure to precipitously reduce the pressure on the periphery of the composition (II), so that moisture in the composition was vaporized to perform puffing, thereby preparing a puffed food composition. The pressure during kneading under pressurization was appropriately adjusted to a pressure (specifically 1 MPa or more) which allowed puffing to be performed by a differential pressure to atmospheric pressure.

For Test Example 31, the prepared dough composition was mixed with sodium hydrogen carbonate as baking powder as a puffing agent at 0.5 mass% in terms of dry mass (III), and the dough was held in a mold (waffle plate for a hot sand maker manufactured by YAMAZEN CORPORATION), and fired at 140°C for 4 minutes (IV) to expand voids in the dough composition.

For Test Example 30, Test Examples 32 to 34, Comparative Example 35 and Test Examples 36 to 39, a step (III) of fermenting the dough composition with yeast was carried out, and a step (IV) of firing the fermented dough was then carried out to expand voids in the dough composition. Specifically, a step of mixing the dough with yeast (raw yeast manufactured by Oriental Yeast Co., Ltd.) at 0.4 mass% in terms of dry mass to perform fermentation at 15°C for 16 hours was carried out, and the fermented dough was then fired at 200°C for 15 minutes in an oven (microwave oven ER-VD7000 from TOSHIBA CORPORATION) to expand voids in the dough composition.

[Measurement of content of components in puffed food composition sample]

Each puffed food composition sample was appropriately weighed, and the content of soluble carbohydrates and monosaccharides being contained in an edible plant (glucose and fructose content) to the entirety of the composition was determined by the measured values obtained by comparison with the contents of monosaccharide or oligosaccharide (di- to decasaccharide) standards with known concentrations by using a high performance liquid chromatography method in accordance with measurement methods in "Usable carbohydrates (glucose, fructose, galactose, sucrose, maltose, lactose and trehalose)" in "Standard tables of food composition in Japan, 2015 (seventh edition), Analysis Manual". The total amount of dietary fibers (content of insoluble dietary fibers and content of soluble dietary fiber content) was measured in accordance with the methods described in "Food Labeling Standards (2015 Cabinet Office Ordinance No. 10)" and "Standard tables of food composition in Japan, 2015 (seventh edition), Analysis Manual" by using the modified Prosky method. The total fat/oil content was measured in accordance with a method described in "Food Labeling Standards (2015 Cabinet Office Ordinance No. 10)" by using a method of extraction with chloroform/methanol mixed liquid. The starch content was measured by the method of "AOAC996.11", where soluble carbohydrates (glucose, maltose, maltodextrin and the like) having an influence on a measured value are removed by extraction with 80% ethanol. The protein content was measured in accordance with "Standard tables of food composition in Japan, 2015 (seventh edition), Analysis Manual" by using the Kjeldahl method: nitrogen/protein conversion method. The contents of other items were calculated from the above-described analysis values. For the "content of soluble carbohydrates being contained in an edible plant", the content of soluble carbohydrates being contained in an edible plant such as pulses, millet, potatoes, seeds, vegetables or fruit was described in terms of dry mass.

[Measurement of density of puffed food composition sample]

The density was measured by gently putting 100 g of each puffed food composition sample in a 250 mL dry measuring cylinder (minimum scale value: 2 mL) without compacting the sample.

[Measurement of particle diameter distribution in puffed food composition sample]

A solution (2 mass% aqueous dispersion liquid of puffed food composition sample) which had been obtained by immersing 1 g of each puffed food composition sample or dough composition in 50 g of distilled water at about 80°C, leaving the mixture to stand for about 5 minutes, and then thoroughly stirring the mixture with a spatula to suspend the sample, and passed through a sieve of 8 mesh having an aperture of 2.36 mm and a wire diameter of 1.0 mm (ASTM E11-04) was used as a particle diameter distribution measurement sample.

The particle diameter distribution of particles in the 2 mass% aqueous dispersion liquid of each food composition sample was measured by using Microtrac MT 3300 EX2 System from MicrotrackBEL Corp. as a laser diffraction particle diameter distribution measurement apparatus. As measurement application software, DMSII (Data Management System version 2 from MicrotrackBEL Corp.) was used. Distilled water was used as a solvent during the measurement. In the measurement, the washing button in the software was depressed to perform washing, the Setzero button in the software was then depressed to perform zero setting, and a sample was directly introduced by sample loading until the concentration of the sample fell within a proper range.

In measurement of a sample before the ultrasonication, to which stirring had not been applied, the result of laser diffraction measurement performed at a flow rate of 60% for a measurement time of 10 seconds immediately after the concentration of the sample was adjusted to be within a proper range within two sample loadings after introduction of the sample was taken as a measured value. On the other hand, in measurement of a sample after the ultrasonication, to which stirring had been applied, the sample was introduced, the concentration of the sample was then adjusted to be within a proper range by sample loading, and the ultrasonication button in the software was then depressed to apply an ultrasonic wave with a frequency of 40 kHz at a power of 40 W for 3 minutes. Thereafter, defoaming was performed three times, sample loading was then performed again, it was confirmed that the sample concentration was still in a proper range, and laser diffraction measurement was then rapidly performed at a flow rate of 60% for a measurement time of 10 seconds. With the thus-obtained result taken as a measured value, the maximum particle diameter, the cumulative diameter at 60% (d60), the cumulative frequency (%) in the range of 20 $\mu$m or more and 2 000 $\mu$m or less and the like were measured. The measurement conditions were set to display for distribution: volume, particle refractive index: 1.60, solvent refractive index: 1.333, measurement upper limit ($\mu$m): 2 000.00 $\mu$m and measurement lower limit ($\mu$m): 0.021 $\mu$m.

In the measurement of the particle diameter distribution of the sample for each channel, the particle diameter for each measurement channel shown in Table 2 above was used as a standard to perform the measurement. The frequency of particles having a particle diameter equal to or smaller than the particle diameter defined as each channel and larger than the particle diameter defined as a channel larger in number by 1 (a measurement lower limit particle diameter in the case of the maximum channel in the measurement range) was measured for each channel, and divided by the total frequency of all channels in the measurement range to determine a particle frequency % of each channel. Specifically, a particle frequency % of each of the 132 channels described below was measured. From the results obtained by the measurement, the particle diameter of a channel with the largest particle diameter was determined as a maximum particle diameter.

[Sensory evaluation on puffed food composition sample]

For the puffed food composition samples of Comparative Examples and Test Examples which had been obtained by the above-described procedure, sensory evaluation was performed in accordance with the following procedure. For (1) the content of edible parts of finely ground pulse and/or millet and a dietary fiber localized portion of an edible plant in terms of dry mass, (2) the content of starch in terms of dry mass, (3) the content of dietary fibers (in particular, insoluble dietary fibers) in terms of dry mass, (4) the content of protein in terms of dry mass and (5) the content, in terms of dry mass, of soluble carbohydrates being contained in an edible plant, the value of the content was not changed by puffing, and the value in the dough and the value in the composition were identical to each other.

First, for conducting each sensory test, sensory inspectors were selected who had received discriminative training for the taste, the texture, the appearance and the like of food in advance, had achieved particularly high marks, had had experience of product development, and a lot of knowledge about quality of food such as its taste, texture and appearance, and were able to perform absolute evaluation on each sensory inspection item. Specifically, inspectors were selected who had received discriminative training in A) to C) below, achieved particularly high marks, had a lot of knowledge about quality of food such as its taste and texture, and were able to perform absolute evaluation on each sensory inspection item.

A) A taste quality discriminating test in which an aqueous solution containing each of the components of five tastes (sweet taste: taste of sugar, acidic taste: taste of tartaric acid, umami: taste of sodium glutamate, salty taste: taste of sodium chloride and bitter taste: taste of caffein) at a concentration close to a threshold is prepared, and from total seven samples of these aqueous solutions and two distilled waters added, a sample of each taste is accurately discriminated.
B) A concentration difference discriminating test in which a concentration difference among five saltwater solutions and acetic acid aqueous solutions having slightly different concentrations is accurately discriminated.
C) A three-point discriminating test in which from total three samples of two soy sauces from manufacturer A and one soy sauce from manufacturer B, the soy sauce from manufacturer B is accurately discriminated.

Next, sensory tests were conducted in which 10 trained sensory inspectors selected by the above procedure evaluated the quality of the puffed food composition samples of Comparative Examples and Test Examples. In this sensory test, evaluation was performed on a scale of 1 to 5 in accordance with the following criteria, where evaluation was performed by eating the composition for the items of "stickiness to teeth during chewing", "airy texture" and "overall evaluation", and in evaluation of the "shaping property", an opening of a composition shaped in a tubular form and puffed was subjected to compressive shaping for 5 seconds with its volume decreased to 20% after the compression at 80°C, the composition after the shaping was cooled to 20°C, and 5 minutes thereafter, whether the opening subjected to compressive shaping was sufficiently bound (not delaminated) was examined to evaluate the "shaping property". At the same time, the inspectors evaluated the flavor of the composition and scorches during shaping, and provided their comments.
For all of the evaluation items, all the inspectors performed evaluation on a standard sample in advance, the scores in evaluation criteria were standardized, and objective sensory inspection was conducted by the 10 inspectors. Evaluation on each evaluation item was performed by a method in which each inspector selected any one number that is closest to his or her own evaluation, from the five-grade scores for each item. The evaluation results were calculated from an arithmetic average value of scores out of the 10 inspectors, and rounded off to the closest integer.

<Evaluation criteria No. 1: stickiness to teeth during chewing>

5: Unlikely to stick to teeth: favorable
4: Not so easily sticking to teeth: slightly favorable
3: Moderate stickiness to teeth: acceptable
2: Slightly likely to stick to teeth: slightly unfavorable
1: Likely to stick to teeth: unfavorable

<Evaluation criteria No. 2: airy texture>

5: Airy texture is sufficiently strongly perceived: favorable
4: Airy texture is slightly strongly perceived: slightly favorable
3: Airy texture is moderate: acceptable
2: Airy texture is slightly weak: slightly unfavorable
1: Airy texture is weak: unfavorable

<Evaluation criteria No. 3: shaping property>

5: The composition opening is completely bound: favorable
4: The composition opening is substantially completely bound: slightly favorable
3: The composition opening is mostly bound: acceptable

2: A part of composition opening is not bound: slightly unfavorable
1: The composition opening is not bound: unfavorable

<Evaluation criteria No. 4: overall evaluation>

5: Good balance between eating quality and shaping property was perceived: favorable
4: Slightly good balance between eating quality and shaping property was perceived: favorable
3: Moderate balance between eating quality and shaping property was perceived: acceptable
2: A little poor balance between eating quality and shaping property: slightly unfavorable
1: Poor balance between eating quality and shaping property: unfavorable

[Results of analysis and evaluation of puffed food composition sample]

Tables 3 to 5 below show the contents of components, the measured values of physical properties and the like and the results of evaluation in the sensory test for the puffed food composition samples of Comparative Examples and Test Examples.

[Table 3]

| | | Dough composition | | | | | | |
|---|---|---|---|---|---|---|---|---|
| | | Edible plant blending ratio | | | | | | |
| | | Pulse (dry mass basis, mass%) | | | | | | |
| | | Yellow pea powder (with seed coat) | Yellow pea powder (no seed coat) | Chickpea powder (with seed coat) | Navy bean (with seed coat) powder | Broad bean (with seed coat) powder | White pea (with seed coat) powder | Mung bean (with seed coat) powder |
| Test Example | 1 | 96 | | | | | | |
| Test Example | 2 | 95 | | | | | | |
| Test Example | 3 | 90 | | | | | | |
| Test Example | 4 | 80 | | | | | | |
| Test Example | 5 | 70 | | | | | | |
| Test Example | 6 | 60 | | | | | | |
| Test Example | 7 | 60 | | | | | | |
| Comparative Example | 8 | | 90 | | | | | |
| Test Example | 9 | | | 90 | | | | |
| Test Example | 10 | | | | 90 | | | |
| Test Example | 11 | | | | | 90 | | |
| Test Example | 12 | | | | | | 90 | |
| Test Example | 13 | | | | | | | 90 |
| Test Example | 14 | 70 | | | | | | |
| Test Example | 15 | 50 | | | | | | |
| Test Example | 16 | 55 | | | | | | |
| Test Example | 17 | 50 | | | | | | |
| Test Example | 18 | 55 | | | | | | |
| Test Example | 19 | 90 | | | | | | |

(continued)

| | | | Dough composition | | | | | | |
|---|---|---|---|---|---|---|---|---|---|
| | | | Edible plant blending ratio | | | | | | |
| | | | Pulse (dry mass basis, mass%) | | | | | | |
| | | | Yellow pea powder (with seed coat) | Yellow pea powder (no seed coat) | Chickpea powder (with seed coat) | Navy bean (with seed coat) powder | Broad bean (with seed coat) powder | White pea (with seed coat) powder | Mung bean (with seed coat) powder |
| Test Example | 20 | | 80 | | | | | | |
| Test Example | 21 | | 80 | | | | | | |
| Test Example | 22 | | 90 | | | | | | |
| Comparative Example | 23 | | 100 | | | | | | |
| Comparative Example | 24 | | 98 | | | | | | |
| Comparative Example | 25 | | 6 | | | | | | |
| Test Example | 26 | | 20 | | | | | | |
| Test Example | 27 | | 35 | | | | | | |
| Comparative Example | 28 | | 4 | | | | | | |
| Comparative Example | 29 | | 90 | | | | | | |
| Test Example | 30 | | 53 | | | | | | |
| Test Example | 31 | | 89.2 | | | | | | |
| Test Example | 32 | | 60.6 | | | | | | |
| Test Example | 33 | | 72.6 | | | | | | |
| Test Example | 34 | | 51.6 | | | | | | |
| Comparative Example | 35 | | 94.2 | | | | | | |
| Test Example | 36 | | | | | | | | |
| Test Example | 37 | | | | | | | | |
| Test Example | 38 | | | | | | | | |
| Test Example | 39 | | 10 | | | | | | |

| | | | Dough composition | | | | | |
|---|---|---|---|---|---|---|---|---|
| | | | Edible plant blending ratio | | | | | |
| | | | Grain, potatoes, seeds, vegetables, fruit (dry mass basis, mass%), * shows processed product of an edible plant containing a large amount of a soluble carbohydrate as a saccharide (sucrose) (1 mass% or more) | | | | | |
| | | | [Grain (millet)] quinoa powder | [Grain (millet)] common millet powder | [Grain (millet)] oat powder | [Vegetable] beet powder (non-edible part + edible part) * | [Grain (millet)] sweet corn powder (non-edible part + edible part) * | [Seed] almond powder * |
| Test Example | 1 | | | | | 4 | | |
| Test Example | 2 | | | | | 5 | | |
| Test Example | 3 | | | | | 10 | | |
| Test Example | 4 | | | | | 20 | | |
| Test Example | 5 | | | | | 30 | | |
| Test Example | 6 | | | | | 40 | | |
| Test Example | 7 | | | | | 10 | | |
| Comparative Example | 8 | | | | | 10 | | |
| Test Example | 9 | | | | | 10 | | |
| Test Example | 10 | | | | | 10 | | |
| Test Example | 11 | | | | | 10 | | |
| Test Example | 12 | | | | | 10 | | |
| Test Example | 13 | | | | | 10 | | |
| Test Example | 14 | | | | | 10 | | |
| Test Example | 15 | | | | | 10 | | |
| Test Example | 16 | | | | | 10 | | |
| Test Example | 17 | | | | | | 50 | |
| Test Example | 18 | | | | | | | 45 |
| Test Example | 19 | | | | | | | |
| Test Example | 20 | | | | | | | |
| Test Example | 21 | | | | | | | |
| Test Example | 22 | | | | | 10 | | |
| Comparative Example | 23 | | | | | | | |
| Comparative Example | 24 | | | | | | | |
| Comparative Example | 25 | | | | | 50 | | |
| Test Example | 26 | | | | | 40 | | |
| Test Example | 27 | | | | | 35 | | |
| Comparative Example | 28 | | | | | 4 | | |

(continued)

| Dough composition | | | | | | | |
|---|---|---|---|---|---|---|---|
| Edible plant blending ratio | | | | | | | |
| Grain, potatoes, seeds, vegetables, fruit (dry mass basis, mass%), * shows processed product of an edible plant containing a large amount of a soluble carbohydrate as a saccharide (sucrose) (1 mass% or more) | | | | | | | |
| | | | [Grain (millet)] quinoa powder | [Grain (millet)] common millet powder | [Grain (millet)] oat powder | [Vegetable] beet powder (non-edible part + edible part) * | [Grain (millet)] sweet corn powder (non-edible part + edible part) * | [Seed] almond powder * |
| Comparative Example | 29 | | | | | 10 | | |
| Test Example | 30 | | | | | | | |
| Test Example | 31 | | | | | | | |
| Test Example | 32 | | | | | | | |
| Test Example | 33 | | | | | | | |
| Test Example | 34 | | | | | | | |
| Comparative Example | 35 | | | | | | | |
| Test Example | 36 | | | | 53 | | | |
| Test Example | 37 | | 53 | | | | | |
| Test Example | 38 | | | 53 | | | | |
| Test Example | 39 | | | | | | 43 | |

| Dough composition | | | | | | | |
|---|---|---|---|---|---|---|---|
| Edible plant blending ratio | | | | | | | |
| Grain, potatoes, seeds, vegetables, fruit (dry mass basis, mass%), * shows processed product of an edible plant containing a large amount of a soluble carbohydrate as a saccharide (sucrose) (1 mass% or more) | | | | | | | |
| | | | [Fruit] mango powder * | [Potato] sweet potato powder * | [Fruit] date juice * | [Vegetable] beet juice * | [Fruit] banana juice (paste) * | [Fruit] persimmon juice * |
| Test Example | 1 | | | | | | | |
| Test Example | 2 | | | | | | | |
| Test Example | 3 | | | | | | | |
| Test Example | 4 | | | | | | | |
| Test Example | 5 | | | | | | | |
| Test Example | 6 | | | | | | | |
| Test Example | 7 | | | | | | | |
| Comparative Example | 8 | | | | | | | |
| Test Example | 9 | | | | | | | |
| Test Example | 10 | | | | | | | |

(continued)

| | | Dough composition | | | | | |
|---|---|---|---|---|---|---|---|
| | | Edible plant blending ratio | | | | | |
| | | Grain, potatoes, seeds, vegetables, fruit (dry mass basis, mass%), * shows processed product of an edible plant containing a large amount of a soluble carbohydrate as a saccharide (sucrose) (1 mass% or more) | | | | | |
| | | [Fruit] mango powder * | [Potato] sweet potato powder * | [Fruit] date juice * | [Vegetable] beet juice * | [Fruit] banana juice (paste) * | [Fruit] persimmon juice * |
| Test Example | 11 | | | | | | |
| Test Example | 12 | | | | | | |
| Test Example | 13 | | | | | | |
| Test Example | 14 | | | | | | |
| Test Example | 15 | | | | | | |
| Test Example | 16 | | | | | | |
| Test Example | 17 | | | | | | |
| Test Example | 18 | | | | | | |
| Test Example | 19 | 10 | | | | | |
| Test Example | 20 | | 20 | | | | |
| Test Example | 21 | | | 20 | | | |
| Test Example | 22 | | | | | | |
| Comparative Example | 23 | | | | | | |
| Comparative Example | 24 | | | | | | |
| Comparative Example | 25 | | | | | | |
| Test Example | 26 | | | | | | |
| Test Example | 27 | | | | | | |
| Comparative Example | 28 | | | | | | |
| Comparative Example | 29 | | | | | | |
| Test Example | 30 | | | 42 | | | |
| Test Example | 31 | | | 10 | | | |
| Test Example | 32 | | | | 38 | | |
| Test Example | 33 | | | | | 25 | |
| Test Example | 34 | | | | | | 44.4 |
| Comparative Example | 35 | | | | | | |
| Test Example | 36 | | | 30 | 12 | | |
| Test Example | 37 | | | 20 | | 22 | |
| Test Example | 38 | | | 15 | | | 25.4 |

(continued)

| Dough composition | | | | | | | |
|---|---|---|---|---|---|---|---|
| Edible plant blending ratio | | | | | | | |
| Grain, potatoes, seeds, vegetables, fruit (dry mass basis, mass%), * shows processed product of an edible plant containing a large amount of a soluble carbohydrate as a saccharide (sucrose) (1 mass% or more) | | | | | | | |
| | | [Fruit] mango powder * | [Potato] sweet potato powder * | [Fruit] date juice * | [Vegetable] beet juice * | [Fruit] banana juice (paste) * | [Fruit] persimmon juice * |
| Test Example | 39 | | | 40.4 | | | |

| Dough composition | | | | | | |
|---|---|---|---|---|---|---|
| Edible plant blending ratio | | | | | | |
| Grain, potatoes, seeds, vegetables, fruit (dry mass basis, mass%), * shows processed product of an edible plant containing a large amount of a soluble carbohydrate as a saccharide (sucrose) (1 mass% or more) | | | | | | |
| | | [Vegetable] cabbage powder (non-edible part + edible part) * | [Grain] wheat flour | [Grain] rice starch powder | [Grain] brown rice powder | [Vegetable] enzymetreated psyllium husk powder |
| Test Example | 1 | | | | | |
| Test Example | 2 | | | | | |
| Test Example | 3 | | | | | |
| Test Example | 4 | | | | | |
| Test Example | 5 | | | | | |
| Test Example | 6 | | | | | |
| Test Example | 7 | | | 30 | | |
| Comparative Example | 8 | | | | | |
| Test Example | 9 | | | | | |
| Test Example | 10 | | | | | |
| Test Example | 11 | | | | | |
| Test Example | 12 | | | | | |
| Test Example | 13 | | | | | |
| Test Example | 14 | | | | | |
| Test Example | 15 | | | 30 | | |
| Test Example | 16 | | 35 | | | |
| Test Example | 17 | | | | | |
| Test Example | 18 | | | | | |
| Test Example | 19 | | | | | |
| Test Example | 20 | | | | | |
| Test Example | 21 | | | | | |
| Test Example | 22 | | | | | |

# EP 4 282 277 B1

(continued)

| | | [Vegetable] cabbage powder (non-edible part + edible part) * | [Grain] wheat flour | [Grain] rice starch powder | [Grain] brown rice powder | [Vegetable] enzymetreated psyllium husk powder |
|---|---|---|---|---|---|---|
| Comparative Example | 23 | | | | | |
| Comparative Example | 24 | | | | | |
| Comparative Example | 25 | 44 | | | | |
| Test Example | 26 | 40 | | | | |
| Test Example | 27 | 30 | | | | |
| Comparative Example | 28 | | | | 92 | |
| Comparative Example | 29 | | | | | |
| Test Example | 30 | | | | | 4.6 |
| Test Example | 31 | | | | | 0.3 |
| Test Example | 32 | | | | | 1.0 |
| Test Example | 33 | | | | | 2.0 |
| Test Example | 34 | | | | | 3.0 |
| Comparative Example | 35 | | | | | 4.8 |
| Test Example | 36 | | | | | 4.6 |
| Test Example | 37 | | | | | 4.6 |
| Test Example | 38 | | | | | 4.6 |
| Test Example | 39 | | | | | 4.6 |

Dough composition. Edible plant blending ratio. Grain, potatoes, seeds, vegetables, fruit (dry mass basis, mass%), * shows processed product of an edible plant containing a large amount of a soluble carbohydrate as a saccharide (sucrose) (1 mass% or more)

| | | Rape seed oil | Refined sucrose | Bread yeast | Sodium hydrogen carbonate | Cellulose powder | Total blending amount (excluding added water) (dry mass basis, mass%) |
|---|---|---|---|---|---|---|---|
| Test Example | 1 | | | | | | 100 |
| Test Example | 2 | | | | | | 100 |
| Test Example | 3 | | | | | | 100 |

Dough composition. Others (dry mass basis, mass%)

(continued)

| | | Dough composition | | | | | |
|---|---|---|---|---|---|---|---|
| | | Others (dry mass basis, mass%) | | | | | Total blending amount (excluding added water) (dry mass basis, mass%) |
| | | Rape seed oil | Refined sucrose | Bread yeast | Sodium hydrogen carbonate | Cellulose powder | |
| Test Example | 4 | | | | | | 100 |
| Test Example | 5 | | | | | | 100 |
| Test Example | 6 | | | | | | 100 |
| Test Example | 7 | | | | | | 100 |
| Comparative Example | 8 | | | | | | 100 |
| Test Example | 9 | | | | | | 100 |
| Test Example | 10 | | | | | | 100 |
| Test Example | 11 | | | | | | 100 |
| Test Example | 12 | | | | | | 100 |
| Test Example | 13 | | | | | | 100 |
| Test Example | 14 | 20 | | | | | 100 |
| Test Example | 15 | | | | | 10 | 100 |
| Test Example | 16 | | | | | | 100 |
| Test Example | 17 | | | | | | 100 |
| Test Example | 18 | | | | | | 100 |
| Test Example | 19 | | | | | | 100 |
| Test Example | 20 | | | | | | 100 |
| Test Example | 21 | | | | | | 100 |
| Test Example | 22 | | | | | | 100 |
| Comparative Example | 23 | | | | | | 100 |
| Comparative Example | 24 | | 2 | | | | 100 |
| Comparative Example | 25 | | | | | | 100 |
| Test Example | 26 | | | | | | 100 |
| Test Example | 27 | | | | | | 100 |
| Comparative Example | 28 | | | | | | 100 |
| Comparative Example | 29 | | | | | | 100 |
| Test Example | 30 | | | 0.4 | | | 100 |
| Test Example | 31 | | | | 0.5 | | 100 |
| Test Example | 32 | | | 0.4 | | | 100 |
| Test Example | 33 | | | 0.4 | | | 100 |
| Test Example | 34 | | | 1 | | | 100 |
| Comparative Example | 35 | | | 1 | | | 100 |
| Test Example | 36 | | | 0.4 | | | 100 |

(continued)

| | | Dough composition | | | | | |
|---|---|---|---|---|---|---|---|
| | | | Others (dry mass basis, mass%) | | | | Total blending amount (excluding added water) (dry mass basis, mass%) |
| | | Rape seed oil | Refined sucrose | Bread yeast | Sodium hydrogen carbonate | Cellulose powder | |
| Test Example | 37 | | | 0.4 | | | 100 |
| Test Example | 38 | | | 2 | | | 100 |
| Test Example | 39 | | | 2 | | | 100 |

[Table 4]

| | | Dry amount-based water content (mass%) | Composition measured value | | | |
|---|---|---|---|---|---|---|
| | | | Puffed food composition * shows dry mass basis | | | |
| | | | Pulse content (mass% *) | Millet content (mass% *) | Content of soluble carbohydrate being contained in edible plant (mass% *) | Proportion of total content of glucose and fructose to soluble carbohydrate (mass% *) |
| Test Example | 1 | 10 | 96.00 | 0.0 | 2.1 | 4.8 |
| Test Example | 2 | 10 | 95.00 | 0.0 | 2.6 | 4.8 |
| Test Example | 3 | 10 | 90.00 | 0.0 | 5.2 | 4.8 |
| Test Example | 4 | 10 | 80.00 | 0.0 | 10.5 | 4.8 |
| Test Example | 5 | 10 | 70.00 | 0.0 | 15.7 | 4.8 |
| Test Example | 6 | 10 | 60.00 | 0.0 | 22.2 | 4.8 |
| Test Example | 7 | 10 | 60.00 | 0.0 | 6.4 | 4.8 |
| Comparative Example | 8 | 10 | 90.00 | 0.0 | 7.0 | 4.8 |
| Test Example | 9 | 20 | 90.00 | 0.0 | 7.0 | 4.8 |
| Test Example | 10 | 30 | 90.00 | 0.0 | 7.0 | 4.8 |
| Test Example | 11 | 8 | 90.00 | 0.0 | 7.0 | 4.8 |
| Test Example | 12 | 5 | 90.00 | 0.0 | 7.0 | 4.8 |
| Test Example | 13 | 8 | 90.00 | 0.0 | 7.0 | 4.8 |
| Test Example | 14 | 10 | 70.00 | 0.0 | 6.6 | 4.8 |
| Test Example | 15 | 10 | 50.00 | 0.0 | 6.2 | 4.8 |
| Test Example | 16 | 10 | 55.00 | 0.0 | 6.3 | 4.8 |
| Test Example | 17 | 10 | 50.00 | 50.0 | 14.0 | 29.9 |
| Test Example | 18 | 10 | 55.00 | 0.0 | 3.4 | 0.0 |
| Test Example | 19 | 10 | 90.00 | 0.0 | 8.3 | 30.2 |
| Test Example | 20 | 10 | 80.00 | 0.0 | 8.8 | 9.1 |
| Test Example | 21 | 10 | 80.00 | 0.0 | 13.4 | 97.3 |
| Test Example | 22 | 10 | 90.00 | 0.0 | 7.0 | 4.8 |

(continued)

| | | Dry amount-based water content (mass%) | Composition measured value | | | |
|---|---|---|---|---|---|---|
| | | | Puffed food composition * shows dry mass basis | | | |
| | | | Pulse content (mass% *) | Millet content (mass% *) | Content of soluble carbohydrate being contained in edible plant (mass% *) | Proportion of total content of glucose and fructose to soluble carbohydrate (mass% *) |
| Comparative Example | 23 | 10 | 100.00 | 0.0 | 0.0 | 0.0 |
| Comparative Example | 24 | 10 | 98.00 | 0.0 | 0.0 | 0.0 |
| Comparative Example | 25 | 10 | 6.00 | 0.0 | 40.4 | 29.3 |
| Test Example | 26 | 10 | 20.00 | 0.0 | 34.2 | 31.9 |
| Test Example | 27 | 10 | 35.00 | 0.0 | 28.6 | 28.8 |
| Comparative Example | 28 | 10 | 4.00 | 0.0 | 2.2 | 4.8 |
| Comparative Example | 29 | 10 | 90.00 | 0.0 | 5.2 | 4.8 |
| Test Example | 30 | 100 | 62.7 | 0.0 | 30.7 | 95.5 |
| Test Example | 31 | 100 | 93.0 | 0.0 | 7.2 | 85.9 |
| Test Example | 32 | 50 | 92.3 | 0.0 | 4.5 | 3.8 |
| Test Example | 33 | 150 | 90.9 | 0.0 | 5.7 | 27.6 |
| Test Example | 34 | 80 | 84.9 | 0.0 | 10.3 | 65.7 |
| Comparative Example | 35 | 100 | 95.2 | 0.0 | 0.0 | 0.0 |
| Test Example | 36 | 100 | 0.0 | 67.8 | 24.9 | 91.0 |
| Test Example | 37 | 100 | 0.0 | 70.6 | 22.9 | 77.5 |
| Test Example | 38 | 100 | 0.0 | 74.9 | 18.0 | 88.4 |
| Test Example | 39 | 100 | 0.0 | 51.5 | 48.0 | 76.7 |

| | | Composition measured value | | | | |
|---|---|---|---|---|---|---|
| | | Puffed food composition * shows dry mass basis | | | | |
| | | Content ratio of oligosaccharide (di- to decasaccharide) (mass% *) | Dietary fiber content (mass% *) | Protein content (mass% *) | Total fat/oil content (mass% *) | Starch content (mass% *) |
| Test Example | 1 | 2.0 | 16.3 | 21.2 | 2.2 | 48.2 |
| Test Example | 2 | 2.5 | 16.4 | 21.1 | 2.2 | 47.7 |
| Test Example | 3 | 5.0 | 16.6 | 20.4 | 2.2 | 45.4 |
| Test Example | 4 | 10.0 | 16.9 | 19.2 | 2.0 | 40.8 |
| Test Example | 5 | 14.9 | 17.3 | 17.9 | 1.9 | 36.2 |
| Test Example | 6 | 21.1 | 17.6 | 16.7 | 1.8 | 31.6 |
| Test Example | 7 | 6.1 | 11.7 | 14.0 | 1.7 | 57.2 |
| Comparative Example | 8 | 6.7 | 16.2 | 20.4 | 2.2 | 45.4 |

(continued)

| | | Composition measured value | | | | |
|---|---|---|---|---|---|---|
| | | Puffed food composition * shows dry mass basis | | | | |
| | | Content ratio of oligosaccharide (di- to decasaccharide) (mass% *) | Dietary fiber content (mass% *) | Protein content (mass% *) | Total fat/oil content (mass% *) | Starch content (mass% *) |
| Test Example | 9 | 6.7 | 16.7 | 18.9 | 4.8 | 32.3 |
| Test Example | 10 | 6.7 | 16.4 | 18.8 | 2.1 | 32.1 |
| Test Example | 11 | 6.7 | 9.2 | 24.3 | 1.9 | 29.6 |
| Test Example | 12 | 6.7 | 16.6 | 20.4 | 2.2 | 33.7 |
| Test Example | 13 | 6.7 | 14.6 | 23.5 | 1.5 | 36.3 |
| Test Example | 14 | 6.3 | 13.3 | 16.1 | 21.7 | 35.4 |
| Test Example | 15 | 5.9 | 22.2 | 11.8 | 1.5 | 52.2 |
| Test Example | 16 | 6.0 | 11.3 | 15.8 | 1.9 | 53.3 |
| Test Example | 17 | 9.8 | 24.1 | 16.3 | 3.8 | 25.5 |
| Test Example | 18 | 3.4 | 13.1 | 20.8 | 24.6 | 27.5 |
| Test Example | 19 | 5.8 | 14.9 | 19.8 | 2.1 | 45.2 |
| Test Example | 20 | 8.0 | 13.7 | 17.9 | 1.9 | 48.6 |
| Test Example | 21 | 2.1 | 13.0 | 17 .8 | 1.9 | 40.2 |
| Test Example | 22 | 6.7 | 16.6 | 20.4 | 2.2 | 45.4 |
| Comparative Example | 23 | 0.0 | 16.2 | 21.7 | 2.3 | 50.0 |
| Comparative Example | 24 | 0.0 | 15.9 | 21.3 | 2.3 | 49.0 |
| Comparative Example | 25 | 28.6 | 17.0 | 11.6 | 1.5 | 4.9 |
| Test Example | 26 | 23.3 | 16.8 | 13.2 | 1.7 | 12.0 |
| Test Example | 27 | 20.4 | 16.8 | 14.7 | 1.8 | 19.2 |
| Comparative Example | 28 | 2.1 | 2.9 | 7.8 | 2.8 | 73.0 |
| Comparative Example | 29 | 5.0 | 16.6 | 20.4 | 2.2 | 45.4 |
| Test Example | 30 | 1.4 | 12.9 | 14.7 | 1.5 | 23.8 |
| Test Example | 31 | 1.0 | 15.2 | 20.4 | 2.2 | 34.5 |
| Test Example | 32 | 4.4 | 16.9 | 21.0 | 2.2 | 34.5 |
| Test Example | 33 | 4.1 | 16.3 | 20.1 | 2.2 | 34.6 |
| Test Example | 34 | 3.5 | 16.4 | 18.7 | 2.1 | 31.4 |
| Comparative Example | 35 | 0.0 | 17.8 | 20.6 | 2.2 | 35.2 |
| Test Example | 36 | 2.2 | 7.5 | 10.4 | 4.0 | 38.7 |
| Test Example | 37 | 5.1 | 6.7 | 10.4 | 2.4 | 38.2 |
| Test Example | 38 | 2.1 | 4.5 | 9.1 | 2.6 | 48.6 |
| Test Example | 39 | 11.2 | 19.1 | 9.3 | 3.0 | 6.3 |

| | | Composition measured value | | | | |
|---|---|---|---|---|---|---|
| | | Puffed food composition * shows dry mass basis | | | | |
| | | Proportion of refined starch relative to starch content of entirety of composition (mass% *) | Proportion of starch derived from pulse relative to starch content of entirety of composition (mass% *) | Proportion of starch derived from pulse and millet relative to starch content of entirety of composition (mass% *) | Dry amount-based water content (mass%) | Density (g/cm³) |
| Test Example | 1 | 0.0 | 99.6 | 99.6 | 6 | 0.42 |
| Test Example | 2 | 0.0 | 99.4 | 99.4 | 12 | 0.39 |
| Test Example | 3 | 0.0 | 98.8 | 98.8 | 10 | 0.42 |
| Test Example | 4 | 0.0 | 97.4 | 97.4 | 12 | 0.45 |
| Test Example | 5 | 0.0 | 95.6 | 95.6 | 15 | 0.45 |
| Test Example | 6 | 0.0 | 93.3 | 93.3 | 18 | 0.52 |
| Test Example | 7 | 54.2 | 44.9 | 44.9 | 9 | 0.34 |
| Comparative Example | 8 | 0.0 | 98.8 | 98.8 | 10 | 0.52 |
| Test Example | 9 | 0.0 | 98.8 | 98.8 | 12 | 0.43 |
| Test Example | 10 | 0.0 | 98.8 | 98.8 | 11 | 0.42 |
| Test Example | 11 | 0.0 | 98.6 | 98.6 | 7 | 0.44 |
| Test Example | 12 | 0.0 | 98.8 | 98.8 | 8 | 0.41 |
| Test Example | 13 | 0.0 | 98.9 | 98.9 | 11 | 0.37 |
| Test Example | 14 | 0.0 | 98.5 | 98.5 | 8 | 0.45 |
| Test Example | 15 | 58.6 | 40.5 | 40.5 | 8 | 0.24 |
| Test Example | 16 | 0.0 | 44.1 | 44.1 | 8 | 0.30 |
| Test Example | 17 | 0.0 | 93.7 | 100.0 | 9 | 0.61 |
| Test Example | 18 | 0.0 | 100.0 | 100.0 | 6 | 0.57 |
| Test Example | 19 | 0.0 | 99.6 | 99.6 | 9 | 0.40 |
| Test Example | 20 | 0.0 | 77.5 | 77.5 | 10 | 0.35 |

(continued)

| | | Composition measured value | | | | |
|---|---|---|---|---|---|---|
| | | Puffed food composition * shows dry mass basis | | | | |
| | | Proportion of refined starch relative to starch content of entirety of composition (mass% *) | Proportion of starch derived from pulse relative to starch content of entirety of composition (mass% *) | Proportion of starch derived from pulse and millet relative to starch content of entirety of composition (mass% *) | Dry amount-based water content (mass%) | Density (g/cm$^3$) |
| Test Example | 21 | 0.0 | 99.2 | 99.2 | 12 | 0.44 |
| Test Example | 22 | 0.0 | 98.8 | 98.8 | 8 | 0.68 |
| Comparative Example | 23 | 0.0 | 100.0 | 100.0 | 7 | 0.36 |
| Comparative Example | 24 | 0.0 | 100.0 | 100.0 | 11 | 0.37 |
| Comparative Example | 25 | 0.0 | 47.6 | 47.6 | 19 | 0.89 |
| Test Example | 26 | 0.0 | 78.7 | 78.7 | 17 | 0.78 |
| Test Example | 27 | 0.0 | 88.4 | 88.4 | 14 | 0.65 |
| Comparative Example | 28 | 0.0 | 2.0 | 2.0 | 9 | 0.19 |
| Comparative Example | 29 | 0.0 | 98.8 | 98.8 | 6 | 0.75 |
| Test Example | 30 | 0.0 | 82.5 | 82.5 | 95 | 0.32 |
| Test Example | 31 | 0.0 | 95.6 | 95.6 | 93 | 0.45 |
| Test Example | 32 | 0.0 | 65.1 | 65.1 | 43 | 0.42 |
| Test Example | 33 | 0.0 | 77.6 | 77.6 | 130 | 0.76 |
| Test Example | 34 | 0.0 | 60.8 | 60.8 | 67 | 0.28 |
| Comparative Example | 35 | 0.0 | 99.0 | 99.0 | 91 | 0.41 |
| Test Example | 36 | 0.0 | 0.0 | 77.1 | 89 | 0.76 |
| Test Example | 37 | 0.0 | 0.0 | 72.6 | 88 | 0.51 |
| Test Example | 38 | 0.0 | 0.0 | 70.4 | 86 | 0.45 |
| Test Example | 39 | 0.0 | 58.8 | 75.9 | 91 | 0.65 |

| | | Composition measured value | | | | |
|---|---|---|---|---|---|---|
| | | Puffed food composition * shows dry mass basis | | | | |
| | | Maximum particle diameter before stirring (μm) | Number-based average diameter of particle after stirring (μm) | Lowering rate in number-based average diameter in stirring after puffing (%) | [A] d90 after stirring (μm) | [C] Crush ratio (lowering rate in d90 in stirring after puffing) (%) |
| Test Example | 1 | 1408.0 | 11.2 | 12% | 521.7 | 64% |
| Test Example | 2 | 2000.0 | 10.4 | 42% | 502.1 | 62% |
| Test Example | 3 | 2000.0 | 9.8 | 41% | 396.7 | 60% |
| Test Example | 4 | 1826.0 | 8.7 | 31% | 375.2 | 54% |
| Test Example | 5 | 1408.0 | 8.2 | 23% | 336.0 | 30% |
| Test Example | 6 | 837.0 | 7.1 | 28% | 311.1 | 27% |
| Test Example | 7 | 456.5 | 5.8 | 55% | 298.2 | 41% |
| Comparative Example | 8 | 1674.0 | 6.7 | 34% | 321.5 | 26% |
| Test Example | 9 | 383.9 | 13.1 | 20% | 291.2 | 33% |
| Test Example | 10 | 645.6 | 15.2 | 23% | 378.1 | 34% |
| Test Example | 11 | 1535.0 | 17.5 | 19% | 532.0 | 41% |
| Test Example | 12 | 1184.0 | 13.2 | 21% | 602.5 | 29% |
| Test Example | 13 | 322.8 | 6.7 | 24% | 208.1 | 28% |
| Test Example | 14 | 1291.0 | 9.2 | 26% | 556.3 | 32% |
| Test Example | 15 | 592.0 | 4.9 | 36% | 302.5 | 35% |
| Test Example | 16 | 497.0 | 5.1 | 41% | 321.1 | 41% |
| Test Example | 17 | 1291.0 | 17.1 | 15% | 481.7 | 35% |
| Test Example | 18 | 1184.0 | 15.4 | 30% | 592.0 | 44% |
| Test Example | 19 | 2000.0 | 12.4 | 38% | 457.9 | 49% |
| Test Example | 20 | 1826.0 | 7.9 | 40% | 466.5 | 38% |

(continued)

| | | Composition measured value | | | | |
|---|---|---|---|---|---|---|
| | | Puffed food composition * shows dry mass basis | | | | |
| | | Maximum particle diameter before stirring ($\mu$m) | Number-based average diameter of particle after stirring ($\mu$m) | Lowering rate in number-based average diameter in stirring after puffing (%) | [A] d90 after stirring ($\mu$m) | [C] Crush ratio (lowering rate in d90 in stirring after puffing) (%) |
| Test Example | 21 | 1826.0 | 6.2 | 35% | 621.2 | 29% |
| Test Example | 22 | 2000.0 | 7.5 | 29% | 489.6 | 26% |
| Comparative Example | 23 | 1408.0 | 10.2 | 41% | 433.9 | 41% |
| Comparative Example | 24 | 1674.0 | 10.7 | 39% | 562.2 | 52% |
| Comparative Example | 25 | 296.0 | 10.4 | 5% | 211.6 | 24% |
| Test Example | 26 | 704.0 | 12.1 | 11% | 301.4 | 32% |
| Test Example | 27 | 1408.0 | 11.5 | 12% | 624.1 | 35% |
| Comparative Example | 28 | 704.0 | 9.5 | 68% | 432.1 | 33% |
| Comparative Example | 29 | 1674.0 | 35.5 | 31% | 523.5 | 28% |
| Test Example | 30 | 2000.0 | 7.8 | 41% | 396.7 | 29% |
| Test Example | 31 | 1674.0 | 9.3 | 32% | 524.1 | 42% |
| Test Example | 32 | 1826.0 | 11.2 | 27% | 387.5 | 38% |
| Test Example | 33 | 1291.0 | 8.8 | 22% | 421.9 | 42% |
| Test Example | 34 | 1674.0 | 6.5 | 37% | 457.7 | 34% |
| Comparative Example | 35 | 1291.0 | 12.5 | 19% | 566.1 | 39% |
| Test Example | 36 | 2000.0 | 16.1 | 28% | 634.1 | 29% |
| Test Example | 37 | 1826.0 | 9.8 | 35% | 532.2 | 35% |
| Test Example | 38 | 1674.0 | 7.4 | 43% | 622.5 | 34% |
| Test Example | 39 | 2000.0 | 9.1 | 29% | 489.8 | 28% |

[Table 5]

| | | Dough composition | | | |
|---|---|---|---|---|---|
| | | [B] d90 after stirring ($\mu$m) | [D] Crush ratio (lowering rate in d90 in stirring after puffing) (%) | Ratio of increase in d90 after stirring (%) ([B]→[A]) | Ratio of increase in crush ratio (%) ([D]→[C]) |
| Test Example | 1 | 253.1 | 15% | 106% | 328% |
| Test Example | 2 | 121.2 | 18% | 314% | 244% |
| Test Example | 3 | 100.4 | 14% | 295% | 330% |
| Test Example | 4 | 121.5 | 13% | 209% | 315% |
| Test Example | 5 | 135.6 | 11% | 148% | 175% |
| Test Example | 6 | 134.1 | 4% | 132% | 643% |
| Test Example | 7 | 100.9 | 20% | 196% | 105% |
| Comparative Example | 8 | 234.2 | 20% | 37% | 30% |
| Test Example | 9 | 123.8 | 17% | 135% | 94% |
| Test Example | 10 | 175.1 | 21% | 116% | 62% |
| Test Example | 11 | 189.5 | 19% | 181% | 116% |
| Test Example | 12 | 302.3 | 14% | 99% | 107% |
| Test Example | 13 | 98.8 | 12% | 111% | 133% |
| Test Example | 14 | 233.1 | 6% | 139% | 433% |
| Test Example | 15 | 78.5 | 11% | 285% | 218% |
| Test Example | 16 | 143.1 | 18% | 124% | 128% |
| Test Example | 17 | 289.7 | 22% | 66% | 59% |
| Test Example | 18 | 288.8 | 25% | 105% | 76% |
| Test Example | 19 | 122.2 | 21% | 275% | 133% |
| Test Example | 20 | 198.6 | 10% | 135% | 280% |

(continued)

| | | Dough composition | | | |
|---|---|---|---|---|---|
| | | [B] d90 after stirring ($\mu$m) | [D] Crush ratio (lowering rate in d90 in stirring after puffing) (%) | Ratio of increase in d90 after stirring (%) ([B]→[A]) | Ratio of increase in crush ratio (%) ([D]→[C]) |
| Test Example | 21 | 232.1 | 9% | 168% | 222% |
| Test Example | 22 | 333.4 | 19% | 47% | 37% |
| Comparative Example | 23 | 187.9 | 16% | 131% | 156% |
| Comparative Example | 24 | 168.9 | 11% | 233% | 373% |
| Comparative Example | 25 | 194.2 | 21% | 9% | 14% |
| Test Example | 26 | 189.5 | 24% | 59% | 33% |
| Test Example | 27 | 211.4 | 22% | 195% | 59% |
| Comparative Example | 28 | 196.5 | 16% | 120% | 106% |
| Comparative Example | 29 | 423.0 | 22% | 24% | 27% |
| Test Example | 30 | 100.4 | 11% | 295% | 164% |
| Test Example | 31 | 293.1 | 19% | 79% | 121% |
| Test Example | 32 | 146.5 | 21% | 165% | 81% |
| Test Example | 33 | 138.7 | 18% | 204% | 133% |
| Test Example | 34 | 158.2 | 14% | 189% | 143% |
| Test Example | 35 | 289.5 | 17% | 96% | 129% |
| Test Example | 36 | 321.1 | 12% | 97% | 142% |
| Test Example | 37 | 198.7 | 14% | 168% | 150% |
| Test Example | 38 | 287.6 | 13% | 116% | 162% |
| Test Example | 39 | 175.3 | 17% | 179% | 65% |

(continued)

| | | stickiness to teeth during chewing | Airy texture | Shaping property | Overall evaluation | Remarks |
|---|---|---|---|---|---|---|
| | | Sensory test | | | | |
| Test Example | 1 | 5 | 5 | 3 | 3 | |
| Test Example | 2 | 5 | 5 | 4 | 5 | |
| Test Example | 3 | 5 | 5 | 5 | 5 | |
| Test Example | 4 | 5 | 5 | 5 | 5 | |
| Test Example | 5 | 5 | 5 | 5 | 5 | |
| Test Example | 6 | 4 | 5 | 5 | 4 | |
| Test Example | 7 | 4 | 5 | 5 | 4 | Aroma of beans is a little weak |
| Comparative Example | 8 | 3 | 2 | 5 | 2 | |
| Test Example | 9 | 5 | 5 | 5 | 5 | |
| Test Example | 10 | 5 | 5 | 5 | 5 | |
| Test Example | 11 | 5 | 5 | 5 | 5 | |
| Test Example | 12 | 5 | 5 | 5 | 5 | |
| Test Example | 13 | 4 | 5 | 5 | 4 | |
| Test Example | 14 | 4 | 5 | 5 | 4 | Smell of oil is noticeable |
| Test Example | 15 | 3 | 5 | 5 | 3 | Aroma of beans is a little weak |
| Test Example | 16 | 3 | 5 | 5 | 3 | Aroma of beans is a little weak |
| Test Example | 17 | 5 | 4 | 4 | 3 | Scorches are observed |
| Test Example | 18 | 5 | 5 | 3 | 3 | |

(continued)

| | | Sensory test | | | | |
|---|---|---|---|---|---|---|
| | | stickiness to teeth during chewing | Airy texture | Shaping property | Overall evaluation | Remarks |
| Test Example | 19 | 5 | 5 | 4 | 4 | Slight scorches are observed, but acceptable |
| Test Example | 20 | 5 | 5 | 5 | 5 | |
| Test Example | 21 | 5 | 5 | 4 | 3 | Scorches are observed |
| Test Example | 22 | 5 | 3 | 5 | 3 | |
| Comparative Example | 23 | 5 | 5 | 1 | 1 | |
| Comparative Example | 24 | 2 | 5 | 5 | 2 | |
| Comparative Example | 25 | 5 | 1 | 5 | 1 | The aroma of beans is weak |
| Test Example | 26 | 5 | 3 | 5 | 3 | |
| Test Example | 27 | 5 | 4 | 5 | 4 | |
| Comparative Example | 28 | 1 | 5 | 3 | 1 | The aroma of beans is weak |
| Comparative Example | 29 | 5 | 2 | 5 | 2 | |
| Test Example | 30 | 5 | 5 | 4 | 4 | Scorches are observed |
| Test Example | 31 | 5 | 5 | 4 | 5 | Slightly scorched, but acceptable |
| Test Example | 32 | 5 | 5 | 5 | 5 | |
| Test Example | 33 | 5 | 4 | 5 | 4 | |
| Test Example | 34 | 5 | 5 | 5 | 5 | Slightly scorched, but acceptable |
| Test Example | 35 | 5 | 5 | 1 | 1 | |
| Test Example | 36 | 5 | 5 | 5 | 5 | Scorches are observed |
| Test Example | 37 | 5 | 5 | 5 | 5 | |

(continued)

| | | Sensory test | | | | |
| | | | | | | |
| | | stickiness to teeth during chewing | Airy texture | Shaping property | Overall evaluation | Remarks |
|---|---|---|---|---|---|---|
| Test Example | 38 | 5 | 5 | 5 | 5 | Slightly scorched, but acceptable |
| Test Example | 39 | 5 | 4 | 5 | 4 | |

Industrial Applicability

The puffed food composition containing a pulse and the method for producing the puffed food composition in the present invention can be conveniently and widely used in the food field, and have extremely high usefulness.

**Claims**

1. A puffed food composition comprising a pulse and/or millet and satisfying all of following characteristics (1) to (7):

(1) the composition contains dietary fibers at 3 mass% or more in terms of dry mass;
(2) the composition contains starch at 5 mass% or more in terms of dry mass;
(3) the composition contains protein at 4 mass% or more in terms of dry mass;
(4) the composition contains a soluble carbohydrate being contained in one or more edible plants selected from the group consisting of pulses, millet, potatoes, seeds, vegetables and fruit at 2 mass% or more in terms of dry mass;
(5) the composition contains an edible part of a pulse and/or millet, and a dietary fiber localized portion of an edible plant, at 10 mass% or more in terms of dry mass to the entirety of the puffed food composition;
(6) a number-based average diameter of puffed food composition particles in a 2 mass% aqueous dispersion liquid of the puffed food composition in an ultrasonicated state, where distilled water serves as a measurement solvent, is 30 $\mu$m or less, by using a laser diffraction particle size distribution measurement apparatus according to the method disclosed in the description; and
(7) a maximum particle diameter of puffed food composition particles in a 2 mass% aqueous dispersion liquid of the puffed food composition in a non-ultrasonicated state, where distilled water serves as a measurement solvent, is 300 $\mu$m or more, by using a laser diffraction particle size distribution measurement apparatus according to the method disclosed in the description,
wherein a density of the puffed food composition is less than 1.00 g/cm$^3$.

2. The puffed food composition according to claim 1, wherein a proportion of a total content of oligosaccharides to the entirety of the puffed food composition is 1.0 mass% or more in terms of dry mass.

3. The puffed food composition according to claim 1 or 2, wherein a proportion of a total content of glucose and fructose to the soluble carbohydrate is 30 mass% or less in terms of dry mass.

4. The puffed food composition according to any one of claims 1 to 3, wherein a lowering rate in d90 by ultrasonication is 10% or more.

5. The puffed food composition according to any one of claims 1 to 4, wherein a lowering rate in number-based average diameter by ultrasonication is 60% or less.

6. The puffed food composition according to any one of claims 1 to 5, wherein a content of grain, potatoes, seeds, vegetables and fruit in the puffed food composition is 5 mass% or more in terms of dry mass.

7.  The puffed food composition according to any one of claims 1 to 6, which is not a preparation by cooking with oil.

8.  The puffed food composition according to any one of claims 1 to 7, which is a non-fermentation puffed food composition or a fermentation puffed food composition.

9.  The puffed food composition according to any one of claims 1 to 8, wherein one or more edible parts selected from the group consisting of pulses and/or millet, and the dietary fiber localized portion of an edible plant are derived from the same type of plant.

10. The puffed food composition according to any one of claims 1 to 9, wherein the pulse is one or more selected from the group consisting of the genera *Pisum, Phaseolus, Cajanus, Vigna, Vicia, Cicer* and *Lens.*

11. The puffed food composition according to any one of claims 1 to 10, wherein the millet is one or more selected from the group consisting of foxtail millet, Japanese millet, common millet, sorghum, rye, oat, adlay, corn, buck wheat, amaranthus and quinoa.

12. The puffed food composition according to any one of claims 1 to 11, wherein the dietary fiber localized portion of an edible plant is one or more selected from the group consisting of a pulse seed coat part, a fleawort seed coat part and a millet bran part.

13. The puffed food composition according to any one of claims 1 to 12, which is substantially free of food additives.

14. The puffed food composition according to any one of claims 1 to 13, wherein a proportion of refined starch to a starch content of the entirety of the puffed food composition is 50 mass% or less in terms of dry mass.

15. The puffed food composition according to any one of claims 1 to 14, wherein a proportion of starch derived from a pulse and/or millet to the starch content of the entirety of the puffed food composition is 30 mass% or more in terms of dry mass.

16. The puffed food composition according to any one of claims 1 to 15, wherein a proportion of starch derived from wheat to the starch content of the entirety of the puffed food composition is 50 mass% or less in terms of dry mass.

17. A food comprising the puffed food composition according to any one of claims 1 to 16.

18. A method for producing the puffed food composition according to any one of claims 1 to 16, comprising the following steps (i) and (ii):

    (i) preparing a dough composition satisfying all of following characteristics (1) to (5):

    (1) the composition contains an edible part of finely ground pulse and/or millet and a dietary fiber localized portion of an edible plant at 10 mass% or more in terms of dry mass;
    (2) the composition contains starch at 5 mass% or more in terms of dry mass;
    (3) the composition contains a dietary fiber at 3 mass% or more in terms of dry mass;
    (4) the composition contains protein at 4 mass% or more in terms of dry mass; and
    (5) the composition contains a soluble carbohydrate being contained in one or more edible plants selected from the group consisting of pulses, millet, potatoes, seeds, vegetables and fruit is 2 mass% or more in terms of dry mass; and

    (ii) expanding voids in the dough composition from the step (i).

19. The method for producing the puffed food composition according to claim 18, wherein the step (ii) includes steps (I) and (II):

    (I) kneading the composition from the step (i) under a pressurized condition at a temperature of 100°C or higher; and
    (II) bringing the composition from the (I) back to normal pressure at a temperature of 100°C or higher.

21. The method for producing the puffed food composition according to claim 19 or 20, wherein the step (ii) includes steps (III) and (IV):

(III) performing yeast fermentation on the dough composition from the step (i) and/or mixing a puffing agent to provide a dough; and

(IV) baking the dough obtained in (III).

21. The method for producing the puffed food according to any one of claims 18 to 20, wherein the dough composition in the step (i) contains a granular complex formed from finely ground pulse and/or millet, and/or one or more edible plants selected from the group consisting of potatoes, seeds, vegetables and fruit, the granular complex having a size of 50 mesh-on, at 10 mass% or more in terms of dry mass to the entirety of the dough composition.

22. The method for producing the puffed food composition according to any one of claims 18 to 21, wherein after the expanding voids in (ii) is performed, d90 after stirring a 2 mass% aqueous liquid of each composition increases by 40% or more.

23. The method for producing the puffed food composition according to any one of claims 18 to 22, wherein after the expanding voids in (ii) is performed, the lowering rate in d90 in an ultrasonicated state on the 2 mass% aqueous dispersion liquid of each composition increases by more than 30%.

24. The method for producing the puffed food composition according to any one of claims 18 to 23, wherein after expanding voids in (ii) is performed, the lowering rate in number-based average diameter in an ultrasonicated state on the 2 mass% aqueous dispersion liquid of each composition increases by 60% or less.

**Patentansprüche**

1. Gepuffte Lebensmittelzusammensetzung, umfassend eine Hülsenfrucht und/oder Hirse und alle folgenden Eigenschaften (1) bis (7) erfüllend:

(1) die Zusammensetzung enthält 3 Masse-% oder mehr Ballaststoffe, bezogen auf die Trockenmasse;
(2) die Zusammensetzung enthält 5 Masse-% oder mehr Stärke, bezogen auf die Trockenmasse;
(3) die Zusammensetzung enthält 4 Masse-% oder mehr Protein, bezogen auf die Trockenmasse;
(4) die Zusammensetzung enthält 2 Masse-% oder mehr eines löslichen Kohlenhydrats, bezogen auf die Trockenmasse, das in einer oder mehreren essbaren Pflanzen enthalten ist, die aus der Gruppe ausgewählt sind, die aus Hülsenfrüchten, Hirse, Kartoffeln, Samen, Gemüse und Obst besteht;
(5) die Zusammensetzung enthält 10 Masse-% oder mehr eines essbaren Teils einer Hülsenfrucht und/oder Hirse und eines lokalisierten Ballaststoffabschnitts einer essbaren Pflanze, bezogen auf Trockenmasse zur Gesamtheit der gepufften Lebensmittelzusammensetzung;
(6) ein zahlenbasierter durchschnittlicher Durchmesser der Partikel der gepufften Lebensmittelzusammensetzung in einer 2 Masse-%igen wässrigen Dispersionsflüssigkeit der gepufften Lebensmittelzusammensetzung in einem ultraschallbehandelten Zustand, in dem destilliertes Wasser als Messlösungsmittel dient, beträgt 30 $\mu$m oder weniger, unter Verwendung einer Laserbeugungs-Partikelgrößenverteilungsmessvorrichtung gemäß dem in der Beschreibung offenbarten Verfahren; und
(7) ein maximaler Partikeldurchmesser von Partikeln der gepufften Lebensmittelzusammensetzung in einer 2 Masse-%igen wässrigen Dispersionsflüssigkeit der gepufften Lebensmittelzusammensetzung in einem nicht ultraschallbehandelten Zustand, in dem destilliertes Wasser als Messlösungsmittel dient, beträgt 300 $\mu$m oder mehr, unter Verwendung einer Laserbeugungs-Partikelgrößenverteilungsmessvorrichtung gemäß dem in der Beschreibung offenbarten Verfahren,

wobei eine Dichte der gepufften Lebensmittelzusammensetzung weniger als 1,00 g/cm$^3$ beträgt.

2. Gepuffte Lebensmittelzusammensetzung nach Anspruch 1, wobei ein Anteil eines Gesamtgehalts von Oligosacchariden an der Gesamtheit der gepufften Lebensmittelzusammensetzung 1,0 Masse-% oder mehr, bezogen auf Trockenmasse, beträgt.

3. Gepuffte Lebensmittelzusammensetzung nach Anspruch 1 oder 2, wobei ein Anteil eines Gesamtgehalts an Glucose und Fructose an dem löslichen Kohlenhydrat 30 Masse-% oder weniger, bezogen auf Trockenmasse, beträgt.

**4.** Gepuffte Lebensmittelzusammensetzung nach einem der Ansprüche 1 bis 3, wobei eine d90-Senkungsrate durch Ultraschallbehandlung 10 % oder mehr beträgt.

**5.** Gepuffte Lebensmittelzusammensetzung nach einem der Ansprüche 1 bis 4, wobei eine Senkungsrate des zahlenbasierten durchschnittlichen Durchmessers durch Ultraschallbehandlung 60 % oder weniger beträgt.

**6.** Gepuffte Lebensmittelzusammensetzung nach einem der Ansprüche 1 bis 5, wobei ein Gehalt an Getreide, Kartoffeln, Samen, Gemüse und Obst in der gepufften Lebensmittelzusammensetzung 5 Masse-% oder mehr, bezogen auf Trockenmasse, beträgt.

**7.** Gepuffte Lebensmittelzusammensetzung nach einem der Ansprüche 1 bis 6, die keine Zubereitung durch Kochen mit Öl ist.

**8.** Gepuffte Lebensmittelzusammensetzung nach einem der Ansprüche 1 bis 7, die eine nicht fermentierte gepuffte Lebensmittelzusammensetzung oder eine fermentierte gepuffte Lebensmittelzusammensetzung ist.

**9.** Gepuffte Lebensmittelzusammensetzung nach einem der Ansprüche 1 bis 8, wobei ein oder mehrere essbare Teile, die aus der Gruppe ausgewählt sind, die aus Hülsenfrüchten und/oder Hirse besteht, und der lokalisierte Ballaststoffabschnitt einer essbaren Pflanze von dem gleichen Pflanzentyp stammen.

**10.** Gepuffte Lebensmittelzusammensetzung nach einem der Ansprüche 1 bis 9, wobei die Hülsenfrucht eine oder mehrere ist, die aus der Gruppe ausgewählt sind, die aus den Gattungen *Pisum, Phaseolus, Cajanus, Vigna, Vicia, Cicer* und *Lens* besteht.

**11.** Gepuffte Lebensmittelzusammensetzung nach einem der Ansprüche 1 bis 10, wobei die Hirse eine oder mehrere ist, die aus der Gruppe ausgewählt sind, die aus Kolbenhirse, japanischer Hirse, gemeiner Hirse, Sorghum, Roggen, Hafer, Hiobsträne, Mais, Buchweizen, Amaranthus und Quinoa besteht.

**12.** Gepuffte Lebensmittelzusammensetzung nach einem der Ansprüche 1 bis 11, wobei der lokalisierte Ballaststoffabschnitt einer essbaren Pflanze eines oder mehrere ist, die aus der Gruppe ausgewählt sind, die aus einem Hülsenfruchtsamenschalenteil, einem Flohsamenschalenteil und einem Hirsekleieteil besteht.

**13.** Gepuffte Lebensmittelzusammensetzung nach einem der Ansprüche 1 bis 12, die im Wesentlichen frei von Lebensmittelzusatzstoffen ist.

**14.** Gepuffte Lebensmittelzusammensetzung nach einem der Ansprüche 1 bis 13, wobei ein Anteil von raffinierter Stärke an einem Stärkegehalt der Gesamtheit der gepufften Lebensmittelzusammensetzung 50 Masse-% oder weniger, bezogen auf Trockenmasse, beträgt.

**15.** Gepuffte Lebensmittelzusammensetzung nach einem der Ansprüche 1 bis 14, wobei ein Anteil von Stärke, die von einer Hülsenfrucht und/oder Hirse stammt, am Stärkegehalt der Gesamtheit der gepufften Lebensmittelzusammensetzung 30 Masse-% oder mehr, bezogen auf Trockenmasse, beträgt.

**16.** Gepuffte Lebensmittelzusammensetzung nach einem der Ansprüche 1 bis 15, wobei ein Anteil von Stärke, die von Weizen stammt, am Stärkegehalt der Gesamtheit der gepufften Lebensmittelzusammensetzung 50 Masse-% oder weniger, bezogen auf Trockenmasse, beträgt.

**17.** Lebensmittel, umfassend die gepuffte Lebensmittelzusammensetzung nach einem der Ansprüche 1 bis 16.

**18.** Verfahren zum Herstellen der gepufften Lebensmittelzusammensetzung nach einem der Ansprüche 1 bis 16, umfassend die folgenden Schritte (i) und (ii):

(i) Zubereiten einer Teigzusammensetzung, die alle folgenden Eigenschaften (1) bis (5) erfüllt:

(1) die Zusammensetzung enthält 10 Masse-% oder mehr eines essbaren Teils einer fein gemahlenen Hülsenfrucht und/oder Hirse und eines lokalisierten Ballaststoffabschnitts einer essbaren Pflanze, bezogen auf Trockenmasse;
(2) die Zusammensetzung enthält 5 Masse-% oder mehr Stärke, bezogen auf die Trockenmasse;

(3) die Zusammensetzung enthält 3 Masse-% oder mehr eines Ballaststoffs, bezogen auf die Trockenmasse;
(4) die Zusammensetzung enthält 4 Masse-% oder mehr Protein, bezogen auf die Trockenmasse; und
(5) die Zusammensetzung enthält ist 2 Masse-% oder mehr eines löslichen Kohlenhydrats, bezogen auf die Trockenmasse, das in einer oder mehreren essbaren Pflanzen enthalten ist, die aus der Gruppe ausgewählt sind, die aus Hülsenfrüchten, Hirse, Kartoffeln, Samen, Gemüse und Obst besteht; und

(ii) Expandieren von Hohlräumen in der Teigzusammensetzung aus Schritt (i).

19. Verfahren zum Herstellen der gepufften Lebensmittelzusammensetzung nach Anspruch 18, wobei der Schritt (ii) die Schritte (I) und (II) enthält:

(I) Kneten der Zusammensetzung aus Schritt (i) unter einer mit Druck beaufschlagten Bedingung bei einer Temperatur von 100 °C oder höher; und
(II) Zurückbringen der Zusammensetzung aus (I) auf Normaldruck bei einer Temperatur von 100 °C oder höher.

21. Verfahren zum Herstellen der gepufften Lebensmittelzusammensetzung nach Anspruch 19 oder 20, wobei der Schritt (ii) die Schritte (III) und (IV) enthält:

(III) Durchführen einer Hefefermentation an der Teigzusammensetzung aus Schritt (i) und/oder Mischen eines Puffmittels, um einen Teig bereitzustellen; und
(IV) Backen des in (III) erhaltenen Teigs.

21. Verfahren zum Herstellen des gepufften Lebensmittels nach einem der Ansprüche 18 bis 20, wobei die Teigzusammensetzung in Schritt (i) 10 Masse-% oder mehr, bezogen auf die Trockenmasse zur Gesamtheit der Teigzusammensetzung, eines körnigen Komplexes enthält, der aus fein gemahlener Hülsenfrucht und/oder Hirse und/oder einer oder mehrerer essbaren Pflanzen ausgebildet ist, die aus der Gruppe ausgewählt sind, die aus Kartoffeln, Samen, Gemüse und Obst besteht, wobei der körnige Komplex eine Größe von 50 Mesh-on aufweist.

22. Verfahren zum Herstellen der gepufften Lebensmittelzusammensetzung nach einem der Ansprüche 18 bis 21, wobei d90 nach dem Rühren einer 2 Masse-%igen wässrigen Flüssigkeit jeder Zusammensetzung um 40 % oder mehr zunimmt, nachdem das Expandieren von Hohlräumen in (ii) durchgeführt ist.

23. Verfahren zum Herstellen der gepufften Lebensmittelzusammensetzung nach einem der Ansprüche 18 bis 22, wobei, nachdem das Expandieren von Hohlräumen in (ii) durchgeführt ist, die d90-Senkungsrate in einem ultraschallbehandelten Zustand an der 2 Masse-%-igen wässrigen Dispersionsflüssigkeit jeder Zusammensetzung um mehr als 30 % zunimmt.

24. Verfahren zum Herstellen der gepufften Lebensmittelzusammensetzung nach einem der Ansprüche 18 bis 23, wobei, nachdem das Expandieren von Hohlräumen in (ii) durchgeführt ist, die Senkungsrate des zahlenbasierten durchschnittlichen Durchmessers in einem ultraschallbehandelten Zustand an der 2 Masse-%igen wässrigen Dispersionsflüssigkeit jeder Zusammensetzung um 60 % oder weniger zunimmt.

**Revendications**

1. Composition alimentaire soufflée comprenant une légumineuse et/ou du millet et satisfaisant à toutes les caractéristiques (1) à (7) suivantes :

(1) la composition contient des fibres alimentaires à 3 % en masse ou plus en termes de masse sèche ;
(2) la composition contient de l'amidon à 5 % en masse ou plus en termes de masse sèche ;
(3) la composition contient des protéines à 4 % en masse ou plus en termes de masse sèche ;
(4) la composition contient un glucide soluble contenu dans une ou plusieurs plantes comestibles choisies dans le groupe constitué par les légumineuses, le millet, les pommes de terre, les graines, les légumes et les fruits à 2 % en masse ou plus en termes de masse sèche ;
(5) la composition contient une partie comestible d'une légumineuse et/ou de millet, et une portion localisée de fibres alimentaires d'une plante comestible, à 10 % en masse ou plus en termes de masse sèche par rapport à la totalité de la composition alimentaire soufflée ;
(6) un diamètre moyen basé sur le nombre des particules de composition alimentaire soufflée dans un liquide de dispersion aqueuse à 2 % en masse de la composition alimentaire soufflée à l'état ultrasonore, où l'eau distillée sert de solvant de mesure, est de 30 μm ou moins, en utilisant un appareil de mesure de la distribution granulométrique par diffraction laser selon le procédé décrit dans la description ; et

(7) un diamètre maximal des particules de composition alimentaire soufflée dans un liquide de dispersion aqueuse à 2 % en masse de la composition alimentaire soufflée à l'état non ultrasonique, où l'eau distillée sert de solvant de mesure, est de 300 μm ou plus, en utilisant un appareil de mesure de la distribution granulométrique par diffraction laser selon le procédé décrit dans la description,

dans lequel une densité de la composition alimentaire soufflée est inférieure à 1,00 g/cm$^3$.

2. Composition alimentaire soufflée selon la revendication 1, dans laquelle une proportion d'une teneur totale en oligosaccharides par rapport à la totalité de la composition alimentaire soufflée est de 1,0 % en masse ou plus en termes de masse sèche.

3. Composition alimentaire soufflée selon l'une des revendications 1 ou 2, dans laquelle une proportion d'une teneur totale en glucose et en fructose par rapport au glucide soluble est de 30 % en masse ou moins en termes de masse sèche.

4. Composition alimentaire soufflée selon l'une quelconque des revendications 1 à 3, dans laquelle un taux d'abaissement en d90 par ultrasonication est de 10 % ou plus.

5. Composition alimentaire soufflée selon l'une quelconque des revendications 1 à 4, dans laquelle un taux d'abaissement en diamètre moyen basé sur le nombre par ultrasonication est de 60 % ou moins.

6. Composition alimentaire soufflée selon l'une quelconque des revendications 1 à 5, dans laquelle la teneur en grains, pommes de terre, graines, légumes et fruits dans la composition alimentaire soufflée est de 5 % en masse ou plus en termes de masse sèche.

7. Composition alimentaire soufflée selon l'une quelconque des revendications 1 à 6, qui n'est pas une préparation par cuisson avec de l'huile.

8. Composition alimentaire soufflée selon l'une quelconque des revendications 1 à 7, qui est une composition alimentaire soufflée non fermentée ou une composition alimentaire soufflée fermentée.

9. Composition alimentaire soufflée selon l'une quelconque des revendications 1 à 8, dans laquelle une ou plusieurs parties comestibles choisies dans le groupe constitué par les légumineuses et/ou le millet, et la portion localisée de fibres alimentaires d'une plante comestible sont dérivées du même type de plante.

10. Composition alimentaire soufflée selon l'une quelconque des revendications 1 à 9, dans laquelle la légumineuse est un ou plusieurs éléments choisis dans le groupe constitué par les genres *Pisum, Phaseolus, Cajanus, Vigna, Vicia, Cicer* et *Lens.*

11. Composition alimentaire soufflée selon l'une quelconque des revendications 1 à 10, dans laquelle le millet est un ou plusieurs éléments choisis dans le groupe constitué par le millet des oiseaux, le millet du Japon, le millet commun, le sorgho, le seigle, l'avoine, les larmes de Job, le maïs, le blé noir, l'amarante et le quinoa.

12. Composition alimentaire soufflée selon l'une quelconque des revendications 1 à 11, dans laquelle la portion localisée de fibres alimentaires d'une plante comestible est un ou plusieurs éléments choisis dans le groupe constitué par une partie de tégument de graine de légumineuse, une partie de tégument de graine de psyllium et une partie de son de millet.

13. Composition alimentaire soufflée selon l'une quelconque des revendications 1 à 12, qui est sensiblement exempte d'additifs alimentaires.

14. Composition alimentaire soufflée selon l'une quelconque des revendications 1 à 13, dans laquelle une proportion d'amidon raffiné par rapport à une teneur en amidon de la totalité de la composition alimentaire soufflée est de 50 % en masse ou moins en termes de masse sèche.

**15.** Composition alimentaire soufflée selon l'une quelconque des revendications 1 à 14, dans laquelle une proportion d'amidon dérivé d'une légumineuse et/ou de millet par rapport à la teneur en amidon de la totalité de la composition alimentaire soufflée est de 30 % en masse ou plus en termes de masse sèche.

**16.** Composition alimentaire soufflée selon l'une quelconque des revendications 1 à 15, dans laquelle une proportion d'amidon dérivé du blé par rapport à la teneur en amidon de la totalité de la composition alimentaire soufflée est de 50 % en masse ou moins en termes de masse sèche.

**17.** Aliment comprenant la composition alimentaire soufflée selon l'une quelconque des revendications 1 à 16.

**18.** Procédé de production de la composition alimentaire soufflée selon l'une quelconque des revendications 1 à 16, comprenant les étapes (i) et (ii) suivantes :

(i) préparation d'une composition de pâte satisfaisant à toutes les caractéristiques (1) à (5) suivantes :

(1) la composition contient une partie comestible de légumineuse et/ou de millet finement broyé et une portion localisée de fibres alimentaires d'une plante comestible à 10 % en masse ou plus en termes de masse sèche ;
(2) la composition contient de l'amidon à 5 % en masse ou plus en termes de masse sèche ;
(3) la composition contient une fibre alimentaire à 3 % en masse ou plus en termes de masse sèche ;
(4) la composition contient des protéines à 4 % en masse ou plus en termes de masse sèche ; et
(5) la composition contient un glucide soluble contenu dans une ou plusieurs plantes comestibles choisies dans le groupe constitué par les légumineuses, le millet, les pommes de terre, les graines, les légumes et les fruits est 2 % en masse ou plus en termes de masse sèche ; et

(ii) expansion des vides dans la composition de pâte de l'étape (i).

**19.** Procédé de production de la composition alimentaire soufflée selon la revendication 18, dans lequel l'étape (ii) comprend les étapes (I) et (II) :

(I) malaxage de la composition de l'étape (i) dans un état pressurisé à une température de 100° C ou plus ; et
(II) retour de la composition de l'étape (I) à la pression normale à une température de 100° C ou plus.

**21.** Procédé de production de la composition alimentaire soufflée selon la revendication 19 ou 20, dans lequel l'étape (ii) comprend les étapes (III) et (IV) :

(III) réalisation d'une fermentation de levure sur la composition de pâte de l'étape (i) et/ou mélange d'un agent de soufflage pour fournir une pâte ; et
(IV) cuisson de la pâte obtenue en (III).

**21.** Procédé de production de la composition alimentaire soufflée selon l'une quelconque des revendications 18 à 20, dans lequel la composition de pâte à l'étape (i) contient un complexe granulaire formé à partir de légumineuse et/ou de millet finement broyé, et/ou d'une ou plusieurs plantes comestibles choisies dans le groupe constitué par les pommes de terre, les graines, les légumes et les fruits, le complexe granulaire ayant une granulométrie de 50 mesh ou plus, à 10 % en masse ou plus en termes de masse sèche par rapport à la totalité de la composition de pâte.

**22.** Procédé de production de la composition alimentaire soufflée selon l'une quelconque des revendications 18 à 21, dans lequel après la réalisation des vides d'expansion en (ii), d90 après agitation d'un liquide aqueux à 2 % en masse de chaque composition augmente de 40 % ou plus.

**23.** Procédé de production de la composition alimentaire soufflée selon l'une quelconque des revendications 18 à 22, dans lequel après la réalisation des vides d'expansion en (ii), le taux d'abaissement à d90 à l'état ultrasonique sur le liquide de dispersion aqueuse à 2 % en masse de chaque composition augmente de plus de 30 %.

**24.** Procédé de production de la composition alimentaire soufflée selon l'une quelconque des revendications 18 à 23, dans lequel après la réalisation des vides d'expansion en (ii), le taux d'abaissement au diamètre moyen basé sur le nombre à l'état ultrasonique sur le liquide de dispersion aqueuse à 2 % en masse de chaque composition augmente de 60 % ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6255045 A
- JP 2003018970 A
- DE 102009048508 A1
- JP 2004305054 A
- JP 2010252770 A
- EP 3729970 A1
- US 2007087107 A1

**Non-patent literature cited in the description**

- Food Labeling Standards. *Cabinet Office Ordinance No. 10*, 2015
- Standard tables of food composition in Japan. Analysis Manual. 2015